(19) Europäisches Patentamt
European Patent Office
Office européen des brevets

(11) **EP 4 379 345 A1**

(12) **EUROPEAN PATENT APPLICATION**

(43) Date of publication:
**05.06.2024 Bulletin 2024/23**

(21) Application number: **22210177.6**

(22) Date of filing: **29.11.2022**

(51) International Patent Classification (IPC):
*G01M 17/02* [(2006.01)]

(52) Cooperative Patent Classification (CPC):
**G01M 17/022; G01M 17/025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokian Renkaat Oyj**
**37101 Nokia (FI)**

(72) Inventors:
• **PAANANEN, Petri**
**37101 NOKIA (FI)**
• **TUOMISTO, Juha**
**37101 NOKIA (FI)**
• **NIEMI, Matti**
**37101 NOKIA (FI)**

• **HÄNNINEN, Juha**
**37101 NOKIA (FI)**
• **RAUTIAINEN, Jarmo**
**37101 NOKIA (FI)**
• **ORBINSKI, Joni**
**37101 NOKIA (FI)**
• **ONNELA, Hannu**
**37101 NOKIA (FI)**

(74) Representative: **Berggren Oy**
**P.O. Box 16**
**Eteläinen Rautatiekatu 10A**
**00101 Helsinki (FI)**

Remarks:
Amended claims in accordance with Rule 137(2) EPC.

(54) **A METHOD AND A DEVICE FOR EVALUATING ENDURANCE OF A TYRE**

(57) A method for evaluating endurance of a tyre, comprising rotating the tyre with respect to a movable surface to generate sound, transducing the sound to a signal using a microphone arrangement and a sampling frequency of at least 20 kHz, and determining from the signal that an endurance of the tyre has been exceeded. A device for performing the method. A computer program for generating a second signal indicative of an endurance of a tyre having been exceeded based on a signal transduced from the sound. A method for teaching a data-driven model for the purpose of determining from a signal an endurance of a tyre.

Fig. 1a

Fig. 1b

EP 4 379 345 A1

**(Cont. next page)**

Fig. 1a

Fig. 1b

**Description**

Technical field

The invention relates to manufacturing tyres. The invention relates to method for testing durability of tyres. The invention relates to methods and devices for predicting tyre failure in a durability test of the tyre.

Background

In the process of manufacturing tyres, before marketing some of the tyres undergo a durability test, i.e. an endurance test. Thus, the tyre manufacturer can be sure that the tyre endures at least the driving conditions indicated for the tyre and endures the driving conditions for suitably long time.

Nowadays such test are performed by analysing the shape of the tyre while the tyre is arranged in a test device simulating driving conditions. Therein the tyre rotates, and mechanical and/or optical probes are used for detecting anomalies of the shape of the tyre. As disclosed in the document JP 2006-232026, in an endurance test, a part of the tyre makes a contact with a test drum 2 (see Fig. 8 of that document), the test drum inducing wear to the tyre, and probes are used to detect anomalies of the shape of the tyre. When an anomaly in the shape of the tyre, such as unevenness, is detected the endurance limit of the tyre has exceeded. The document JP 2006-232026 discloses a probe having a contacting part and a non-contact part. However, contacting probes and non-contacting probes are separately known for this purpose from the documents JP2004-077464 and JP2004-177240, respectively.

Oftentimes the shape anomalies occur only at a very late stage of the endurance test. Quite often it is impossible to stop the test before the whole tyre bursts. In such a test, a peripheral speed of the tyre may be e.g. around 150 km/h, or even 300 km/h, whereby tyre burst poses safety risks for operators and/or may damage the test equipment. Moreover, when anomalies are detected only at a very late stage it is hard or even impossible to analyse the root cause for the tyre failure.

Therefore, there is a need for a method wherein the tyre failure can be detected in an early stage, even before the shape of the tyre changes.

Summary

It has now been found that an onset of a failure of a tyre in such a test can be detected much earlier by analysing the sound generated by the tyre in such a test.

Typically, the sound level as well as the pitch of the sound are affected by the peripheral speed of the tyre in such a test. However if the pitch and/or the sound level increases even if other things in the test are constant, this has been found to be indicative of the onset of tyre failure, i.e. that the endurance of the tire has been reached.

Furthermore it has been surprisingly found that oftentimes the failure is observable from sound having a high frequency. Moreover, to analyse sound having a high frequency, a high sampling frequency should be used to take samples from the signal indicative of the sound. The word "sampling rate" is sometimes used for "sampling frequency"; however, the latter is used throughout this specification. It has also been found that the failure is more easily observable from the sound, when detected from the far field rather than near field. Thus, preferably, a microphone used for the purpose of detecting the sound generated by the tire is placed reasonably far away from the tire.

The invention is characterized in more specific terms the independent claims and preferable embodiments are disclosed in the dependent claims. These and other embodiments are disclosed in the description and figures.

Brief description of the drawings

Fig. 1a    shows, in an end view, a device for evaluating endurance of a tyre,
Fig. 1b    shows, in a front view, a device for evaluating endurance of a tyre,
Fig. 1c    shows a circumferential speed of the tyre in a test for evaluating endurance of a tyre as function of time,
Fig. 2a    shows a total sound level as measured from a first tyre using a first microphone as function of time,
Fig. 2b    shows a total sound level as measured from a second tyre using a first microphone as function of time,
Fig. 2c    shows a total sound level as measured from a third tyre using a first microphone as function of time,
Fig. 3a    shows a time derivative of the total sound level shown in Fig. 2a,
Fig. 3b    shows a time derivative of the total sound level shown in Fig. 2b,
Fig. 3c    shows a time derivative of the total sound level shown in Fig. 2c,
Fig. 4a    shows a part of a frequency spectrum of the sound level of Fig. 2b at two specific instances of time,

| | |
|---|---|
| Fig. 4b | shows a time derivative of an average of a part of the spectrum of Fig. 2b, the average being taken over the frequency range 15 kHz to 21 kHz only, |
| Fig. 4c | shows a spectrogram, i.e. a frequency spectrum as function of time, of the sound level of Fig. 2c, |
| Fig. 4d | shows a square-frequency-weighted level of the sound level of Fig. 2b, |
| Fig. 4e | shows a time derivative of the square-frequency-weighted sound level of Fig. 4d, |
| Fig. 4f | shows a square-frequency-weighted level of the sound level of Fig. 2c, |
| Fig. 4g | shows a time derivative of the square-frequency-weighted sound level of Fig. 4f, |
| Fig. 5a | shows, in an end view, a device for evaluating endurance of a tyre, the device comprising a mechanical sensor configured to detect a condition of the tyre, |
| Fig. 5b | shows, in a front view, the device of Fig. 5a, |
| Fig. 5c | shows, in an end view, a device for evaluating endurance of a tyre, the device comprising an optical sensor configured to detect a condition of the tyre, |
| Fig. 5d | shows, in a front view, the device of Fig. 5c, |
| Fig. 6 | shows, in a front view, a device for evaluating endurance of a tyre and some measures of such a device, |
| Fig. 7a | shows, in a front view, a device for evaluating endurance of a tyre, the device comprising two microphones, |
| Fig. 7b | shows, in a front view, a device for evaluating endurance of a tyre, the device comprising three microphones, |
| Fig. 8 | shows, in an end view, a device for evaluating endurance of a tyre, wherein a movable surface is an inner surface of a test drum, |
| Fig. 9 | shows, in an end view, a device for evaluating endurance of a tyre, wherein a movable surface is a surface of a belt, |
| Fig. 10 | shows, in a front view, a device for evaluating endurance of a tyre and a position of the first microphone, |
| Fig. 11 | shows steps of a method for teaching a data-driven model to recognize, from a signal, which is transformed from an audio signal generated by a rotating tyre in an endurance test, an onset of failure of the tyre, |
| Fig. 12 | shows steps of a method for recognizing that the data-driven model is inaccurate, and |
| Fig. 13 | shows steps of a method for recognizing that the data-driven model is inaccurate. |

Detailed description

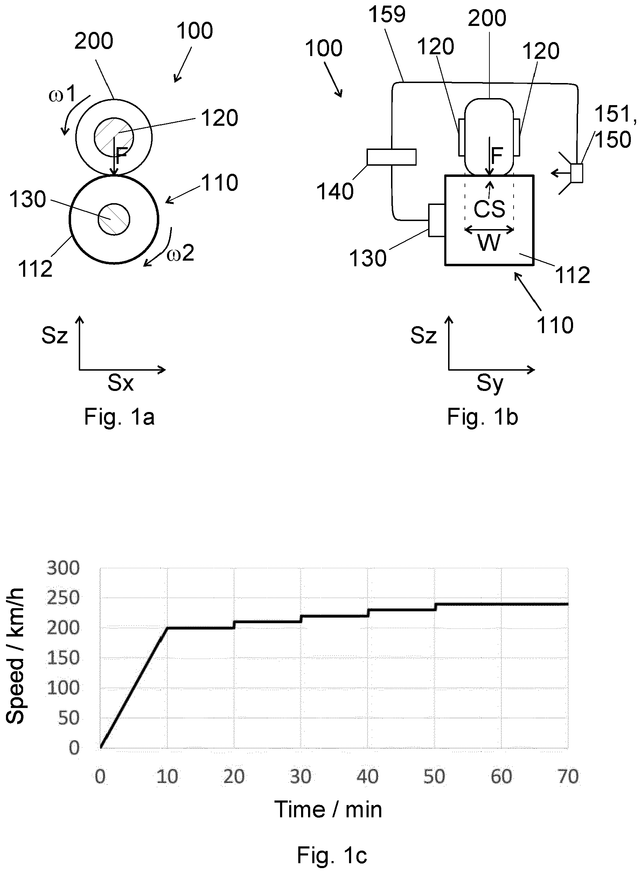

Figure 1a shows in an end view parts of a device 100 for evaluating endurance of a tyre 200, and Fig. 1b shows in a front view parts of the device 100 for evaluating endurance of a tyre 200. The figures 1a and 1b show also the tyre 200, even if not part of the device 100. By using such a device 100, a method for evaluating endurance of the tyre 200 is performed. The method can be performed also using some other device.

Referring to Figs. 1a and 1b an endurance of a tyre 200 can be evaluated by a method. The method comprises arranging the tyre 200 to a tyre holder 120 and rotating the tyre 200 and/or moving a movable surface 110 such that the tyre 200 makes a rolling contact with the movable surface 100. For example, in Fig. 1a, the tyre 200 rotates by an angular velocity ω1 anti-clockwise and a test drum 112 having the movable surface 110 rotates by an angular velocity ω2 clockwise. In an embodiment, an endurance of a pneumatic tyre is evaluated. In an embodiment, an endurance of an inflated pneumatic tyre is evaluated. The tyre may be inflated to at least 2 bar (gauge pressure) or to at least 2.0 bar (gauge pressure), such as 2.0 to 4.5 bar.

Herein the movable surface 110 is preferably an outer surface of a test drum 112, as depicted in Fig. 1a. The tyre 200 may be rotated e.g. by a rotor for the tyre (not shown). The tyre 200 contacts the movable surface 110 via a contact surface CS. Upon rotating the tyre, because the tyre 200 makes the contact with the movable surface 110, also the movable surface 110 moves. In addition or alternatively, the movable surface 110 may be moved e.g. with a rotor 130. Upon moving the movable surface 110, the tyre 200 rotates. In the test, the velocity of the movable surface 110 equals the peripheral velocity of the tyre 200 whereby there is no slip in between the movably surface and the tyre 200. When a surface of a test drum 112 forms the movable surface 110, a diameter of the test drum 112 is preferably 1.5 to 2.5 metres, such as 1.6 to 2.1 metres.

When the tyre 200 rotates by making the rolling contact with the movable surface 110, sound (i.e. noise) is generated. As detailed above, it has been found that the sound is indicative of the onset of tyre failure. Moreover, the endurance of the tire is reached when the tire starts to fail. The sound is detected using one or more microphones. This microphone or these microphones are part of a microphone arrangement 150. Thus, the method comprises transducing the sound generated by the tyre 200 to a signal using a microphone arrangement 150 comprising at least a first microphone 151. The signal is then analysed.

It has been found that the onset of failure can be determined from the sound level or from a spectral sound level or both. Herein the term "sound level" refers to the total power of the sound expressible e.g. in deciBels (dB). However, the signal obtained from the microphone arrangement 150 is typically an electric signal, such as a voltage or a current. Thus, instead of the sound, it is possible to analyse the signal as such.

In one embodiment, a level of the signal is indicative of the tyre failure. Herein the term "level of the signal" refers to the signal strength. The signal strength may be e.g. an RMS (root-mean-square) value of the signal as calculated over proper period of time. The proper period may be e.g. at least 100 ms (milli seconds). This embodiment comprises determining that the level of the signal exceeds a first threshold (hereinbelow alternative A).

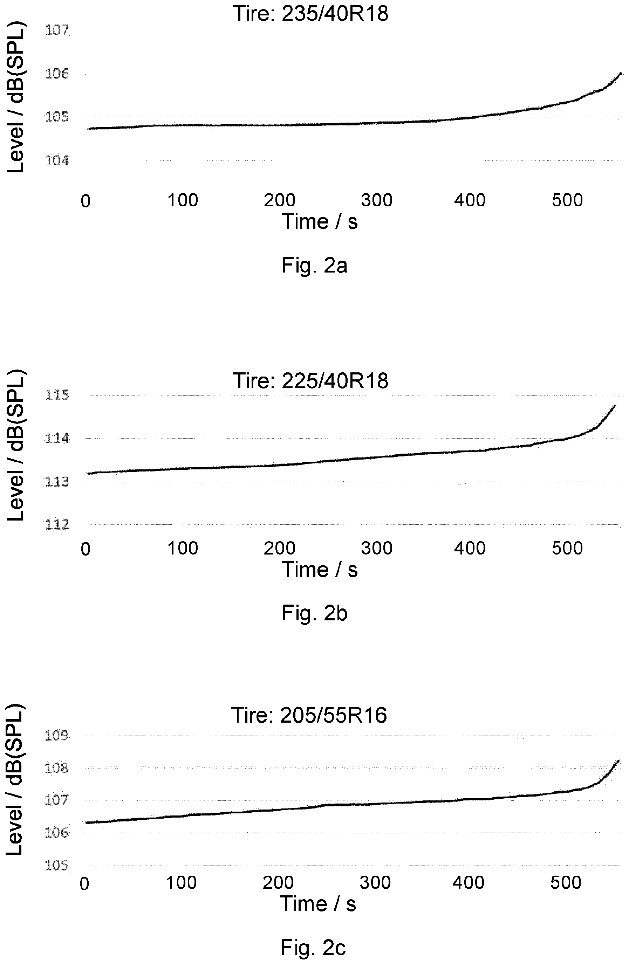

As an example, Figs. 2a to 2c show sound levels recorded from three tyres up to the point of tyre failure. The sound level is given in units of dB(SPL) standing for deci Bels of Sound Pressure Level. In line with what has been said above, the signal as such may look substantially the same, however having different units. When the signal stops, the endurance of the tyre was exceeded; which was determined by using a mechanical/optical detector. As shown, in each test a rapid increase in the signal (or the sound pressure level) was seen before the endurance was exceeded. The rapid increase in the signal is thus indicative of onset of tire failure, and correspondingly, reaching an endurance.

However, it is also possible (alternatively to the signal or in addition to the total signal) to analyse the spectral components of the signal.

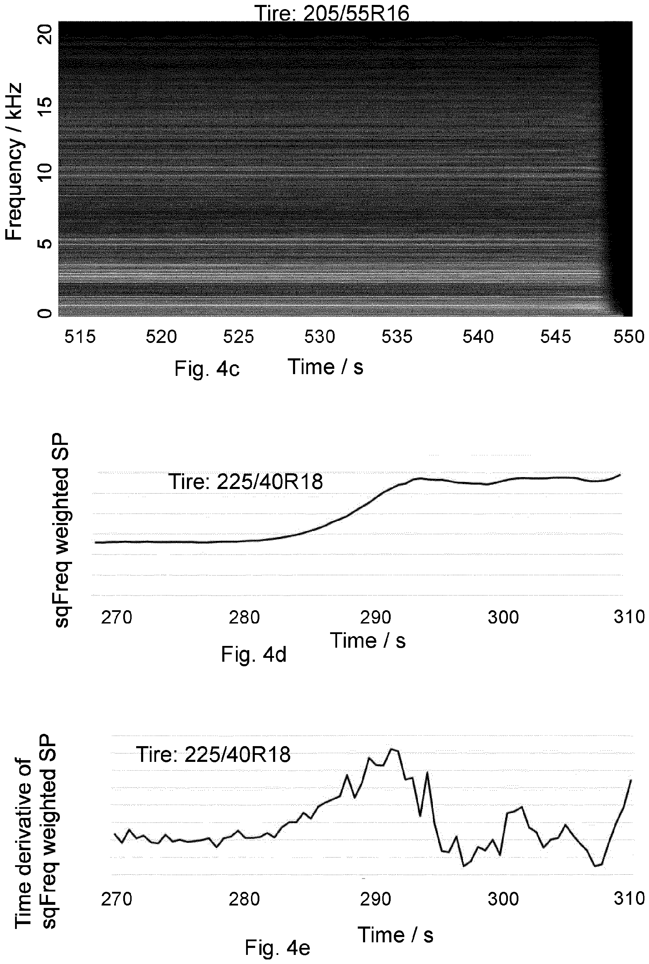

To this end, Fig. 4c shows a spectrogram of the signal obtained by transducing the sound generated by the tyre. The spectrogram shows a frequency distribution of the signal as function of time. The frequency distribution can be calculated e.g. by using Fourier transformation, e.g. the fast Fourier transformation (FFT). In Fig. 4c, the dark colour indicates small Fourier coefficients, and the light colour indicate large Fourier coefficients. As shown in Fig. 4c, in general, the coefficients for lower frequencies are larger than the coefficient for high frequencies.

In one embodiment, a level of at least a part of the spectrum of the signal is indicative of the tyre failure. Herein the term "level of at least a part of the spectrum of the signal" refers a strength of at least a part of a spectrum of the signal. The term "spectrum" refers to a spectrum as calculated by a transformation from the signal, e.g. a Fourier transform of the signal, such as a power spectrum or an energy spectrum of the signal.

The "at least a part of the spectrum of the signal" refers to at least a part of the spectrum, such as a certain frequency range of the spectrum. The spectrum may be the power spectrum of the signal. The part may be e.g. a part in the range of F1 to F2, wherein F1 and F2 are lower and upper frequencies of the range.

The "level" of this part of the spectrum (or whole spectrum) is then characterized by the level at each frequency within the part (or whole) of the spectrum. When such a part (or whole) of the spectrum is concerned that comprises multiple frequencies, the whole level is calculated as an integral (or sum) of the levels at each frequency within the part (or whole) of the spectrum, the integral (or sum) being calculated over the part of the spectrum concerned. However, when the part of spectrum only comprises one frequency, the level at that frequency is the level of the part of the spectrum. Moreover, the "level" may include multiplication of the Fourier coefficients with e.g. a frequency-dependent factor, such a square of the frequency.

In other words, the "level of at least a part of the spectrum of the signal" may refer to [a] a level of a spectrogram of the signal at a certain frequency or [b] an integral or a sum of the level of the spectrogram of the signal, the integral or the sum being calculated over the frequency range concerned or the frequency ranges concerned.

Moreover, when discussing the determination of onset of failure in more detail (see below), terms "a level of a part of the spectrum of the signal or the whole spectrum of the signal" and "a level of a part or the whole spectrum of the signal" are used interchangeable with the term "level of at least a part of the spectrum of the signal".

Thus, an embodiment comprises determining that a level of at least a part of the spectrum of the signal exceeds a second threshold (hereinbelow alternative B).

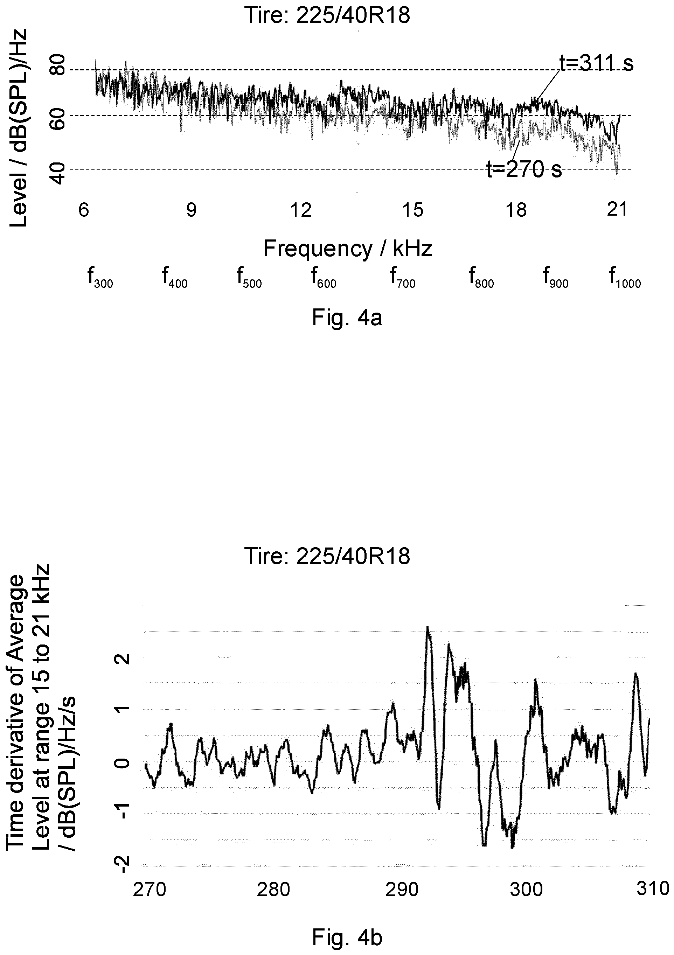

As an example, Fig. 4a shows a part of a spectrum at two instances of time. Referring to Fig. 4c, the whole spectrum may include frequencies of e.g. 0 Hz to 22 kHz (the maximum depending on sampling frequency), so clearly Fig. 4a represents only a small portion of the spectrum. The black line represents data just before failure at a time t=311 s, and the light line represents data received from a fully functional tyre at a time t=270 s. As shown in the figure, the spectral components at the range up to 10 kHz do not show a significant change. However, at the range 15 kHz to 21 kHz the change is clearly visible. Thus, analysis of the spectral components may provide further (or alternative) information indicative of tyre failure. In general, the maximum frequency of analysable sound is half of the sampling frequency. Thus, for analysing 22 kHz sound, a sampling frequency of at least 44 kHz should be used.

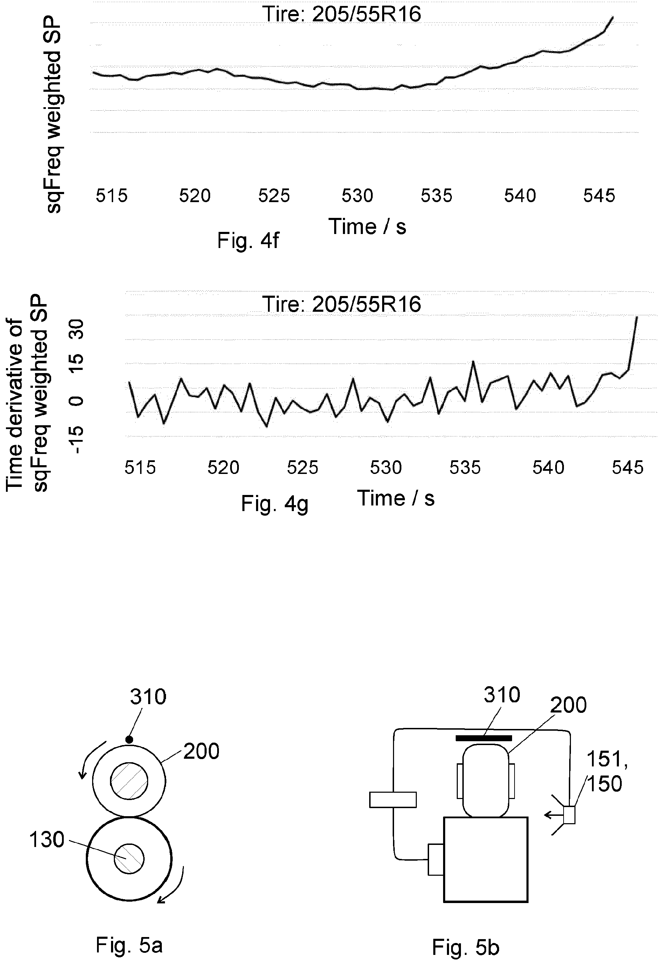

As another example, Figs. 4d and 4f shows another level of the signal. The levels in Figs. 4d and 4f are calculated by multiplying the Fourier coefficient $c_i$ of each frequency fi by the square of the frequency $f_i^2$ and summing these terms over all frequencies; and taking square root of the sum. Mathematically, the level of Figs. 4d and 4f is thus calculated as $\sqrt{\sum_i c_i (f_i)^2}$, wherein the index i runs over all indexes. Thus, the levels shown in Figs. 4d and 4f are levels of the whole spectrum of the signal. Evidently, if considered feasible, only such indexes i that correspond to only a part of the spectrum could be considered. As shown in Figs. 4f, also this level shows an increase before the endurance is exceeded.

More generally, in an embodiment, the a level of a part of the spectrum of the signal or the whole spectrum of the signal refers to a value calculated as a sum of the Fourier coefficients of the spectrum or the part of the spectrum, weighed by a power of the corresponding frequency. In mathematical terms, the level may be calculated as (Formula 1):

$$\left( \sum_{i=i_{min}}^{i_{max}} c_i \, (f_i)^k \right)^l$$

wherein:

- i is an index of the frequency,
- $c_i$ is the i:th Fourier coefficient representative of the signal strength corresponding to the i:th frequency fi,
- fi is the i:th frequency,
- k is a first exponent, e.g. at least 0, e.g. 2,
- l is a second exponent, e.g. more than 0 and at most 1 (for example if k is not zero l may be 1/k; and l may be one if k is zero),
- $i_{min}$ is the lower limit of the index i for the part of the spectrum, and
- $i_{max}$ is the upper limit of the index i for the part of the spectrum.

Some frequencies fi, wherein i is 300 to 1000 are schematically shown in Fig. 4a. However, clearly the FFT method gives values for other frequencies fi, wherein the index i is less than 300 or any (other) value between 300 and 1000. However, for purposes of presentation, not all indexes have been illustrated. To clarify the indexes, e.g. if a frequency range of 12 kHz to 15 kHz was of particular interest, the frequencies with the indexes 590 to 720 might be considered. Thus $i_{min}$ would be 590 and $i_{max}$ would be 720.

It is noted that the frequencies may fi may be given positive weight by using the first exponent k more than zero; or no weight by having k equal to zero; or negative weight by having k less than zero.

As an example, the figure 4d shows the level calculated using the first exponent k equal 2, the second exponent l equal ½, the lower limit index $i_{min}$ equal the minimum index for frequencies obtainable by FFT, and the upper limit index $i_{min}$ equal the maximum index for frequencies obtainable by FFT.

Naturally, multiple parts of the spectrum may also be considered. Thus, in mathematical terms, the level may be calculated as (Formula 2):

$$\sum_j A_j \left( \sum_{i=i_{min,j}}^{i_{max,j}} c_i \, (f_i)^k \right)^l$$

wherein:

- j is an index of a part of the spectrum,
- $A_j$ is a weight factor for the j:th part of the spectrum (e.g. more than zero),
- $i_{min,j}$ is the lower limit of the index i for the j:th part of the spectrum,
- $i_{max,j}$ is the upper limit of the index i for the j:th part of the spectrum,
- i is an index of frequency,
- $c_i$ is the i:th Fourier coefficient representative of the signal strength corresponding to the i:th frequency $f_i$,
- $f_i$ is the i:th frequency,
- k is an exponent, e.g. 0, e.g. 2,
- l is a second exponent, e.g. more than 0 and at most 1, for example if k is not zero l may be 1/k; and l may be one if k is zero.

If needed, in Formula 2, the exponent k and/or the second exponent l may depend on which part of the spectrum is taken into account. Thus, instead of a constant exponent k, an index-dependent exponent $k_j$ could be used. Likewise, instead of a constant second exponent l, an index-dependent second exponent $l_j$ could be used in Formula 2.

For example if a frequency ranges of 6 kHz to 9 kHz and 12 kHz to 15 kHz were of particular interest, the frequencies with the indexes 300 to 450 and 590 to 720 might be considered. Thus $i_{min,1}$ would be 300 and $i_{max,1}$ would be 450; and $i_{min,2}$ would be 59 and $i_{max,2}$ would be 720.

Specific examples for the exponents include:

- First exponent k equals 0 and second exponent l equals 1; and

- First exponent k equals 2 and second exponent I equals 1/2.

As an alternative the $f^k$ type weighting, an $a^f$ type weighting could also be considered instead. Thus, instead of, or in addition to, Formula 2, the level may be calculated as (Formula 3):

$$\sum_m B_m \log_b \left( \sum_{n=n_{min,m}}^{n_{max,m}} c_n \, (a)^{f_n} \right)$$

wherein:

- m is an index of a part of the spectrum,
- $B_m$ is a weight factor for the m:th part of the spectrum (e.g. more than zero),
- n is an index of frequency,
- $n_{min,m}$ is the lower limit of the index n for the m:th part of the spectrum,
- $n_{max,m}$ is the upper limit of the index n for the m:th part of the spectrum,
- $c_n$ is the n:th Fourier coefficient representative of the signal strength corresponding to the n:th frequency $f_n$,
- $f_n$ is the n:th frequency,
- a is a primary base value, greater than 0, e.g. the Euler's number e, and
- b is a secondary base value for the logarithm; e.g. equal to a.

If needed, in Formula 3, the primary base value a and/or the secondary base value b may depend on which part of the spectrum is taken into account. Thus, instead of a constant primary base value a, an index-dependent primary base value $a_m$ could be used. Moreover, instead of a constant secondary base value b, an index-dependent secondary base value $b_m$ could be used.

Naturally, different weighting schemes can be applies on different parts of the spectrum. Thus, a combination of the following Formula can also be applied (Formula 4):

$$\sum_j A_j \left( \sum_{i=i_{min,j}}^{i_{max,j}} c_i \, (f_i)^k \right)^l + \sum_m B_m \log_b \left( \sum_{n=n_{min,m}}^{n_{max,m}} c_n \, (a)^{f_n} \right)$$

Preferably the frequency ranges defined, on one hand by the index limits $i_{min,j}$ and $i_{max,j}$ and on the other hand by $n_{min,m}$ and $n_{max,m}$ do not overlap.

It has been found that typically frequencies at least 10 kHz are indicative of tyre failure. It is known that in order to record also the high frequency components of the sound, a high sampling frequency should be used. In particular, the sampling frequency should be at least twice the highest frequency of interest. Therefore, it has been found that an early failure of the tire can be reliably detected, when a sampling frequency for measuring the signal is at least 20 kHz. Thus, an embodiment of the method comprises transducing the sound generated by the tyre to a signal using a microphone arrangement comprising at least a first microphone and a sampling frequency of at least 20 kHz. It is not important whether the sampling is made within the microphone arrangement 150 of the device, or whether the processor makes the sampling. The processor may receive a discrete signal. The processor may receive a continuous (analogue) signal and sample the continuous signal with the sampling frequency. Thus, an embodiment of the device, the device (e.g. the processor and/or the microphone arrangement) is configured such that a sampling frequency of the signal is at least 20 kHz.

In particular, it seems that sound frequencies in the range of 10 kHz to about 25 kHz, such as 10 kHz to 22 kHz or 10 kHz to 24 kHz, are typically the most promising frequencies for determining an onset of tyre failure. Thus, preferably, the sampling frequency is at least 44 kHz, such as at least 48 kHz. As detailed above, these sampling frequencies ensure that sound having a frequency of 22 kHz or 24 kHz is analysable e.g. after calculating spectral components of the signal. Naturally then also sound having a lower frequency is analysable.

Thus, in this alternative B (see above) as well as in the alternative D (see below) preferably the at least a part of the spectrum of the signal of which level is analysed comprises at least a frequency selected from the range 10 kHz to about 25 kHz (e.g. 10 kHz to 22 kHz or 10 kHz to 24 kHz). However, it is noted that too low a sampling frequency would have the effect that the high frequency components of the sound are omitted. Thus, the sufficiently high sampling frequency has an effect also in the context of alternative A (i.e. when not performing a spectral analysis of the signal). However, in particular when spectral components of the signal from the signal are calculated and analysed, the sufficiently high sampling frequency helps identifying onset of tyre failure from the signal. For similar reasons, this applies also alternatives C and D as detailed below.

Moreover, as well known, for computing the Fourier transform or the spectrogram, the signal must be recorded for a proper period of time in order to obtain information of the low frequencies. The proper period may be e.g. at least 100 ms (milli seconds), corresponding to one full wave of a 10 Hz signal. Also this applies to the alternative A, and in particular to alternative B. For similar reasons, this applies also alternatives C and D as detailed below.

In one embodiment, a time derivative of the level of the signal is indicative of the tyre failure. Herein the term "level" refers to the signal strength as discussed above. Moreover, as conventional, the time derivative of this level refers to the rate of change of this level with respect to time. In practice the level will be determined at two instances of time, and the difference the difference between the levels at these two instances is indicative of the derivative. Thus, an embodiment comprises determining that that a time derivative of a level of the signal exceeds a third threshold (hereinbelow alternative C).

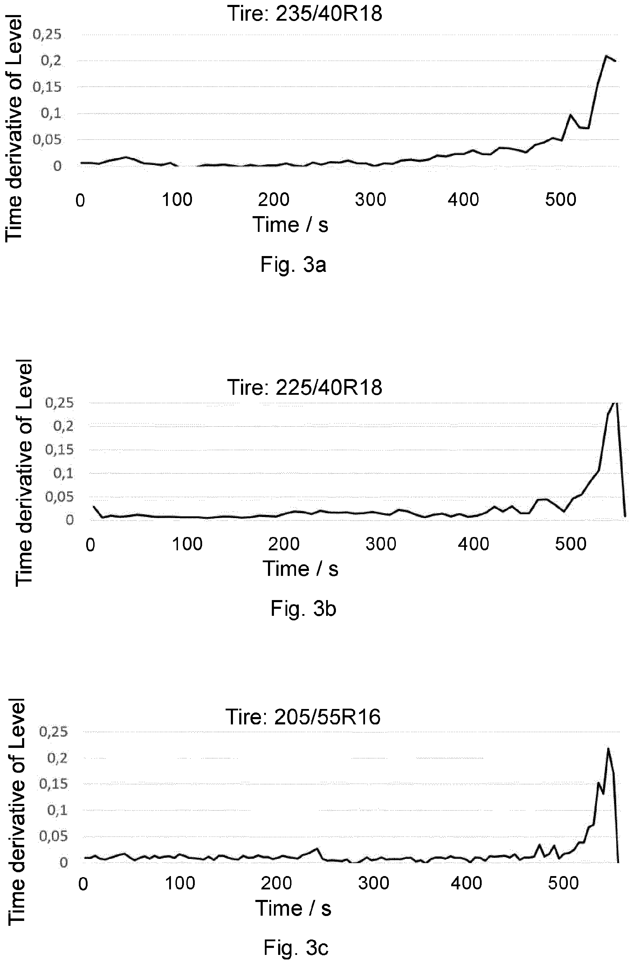

Figures 3a to 3c show the time derivatives of the levels shown in Figs. 2a to 2c, respectively. As shown in Figs. 2a to 2c, the level of the signal tends to rise, which shows clearly in the time derivatives in Figs. 3a to 3c. As shown therein, for example a rate (i.e. time derivative) of the sound pressure of 0.15 dB/s sems to be indicative of failure. Thus the time derivative of the sound pressure level exceeding this threshold may be indicative of tyre failure.

In one embodiment, a time derivative of a level of at least a part of the spectrum of the signal is indicative of the tyre failure. What has been said above about the "level of at least a part of the spectrum of the signal" applies. Moreover, as conventional, the time derivative of this level refers to the rate of change of this level with respect to time. In practice the level will be determined at two instances of time, and the difference between the levels at these two instances is indicative of the derivative. For example, Fig. 4e shows a time derivative of the level shown in Fig. 4d. As shown therein, the derivative increases a lot before failure. Thus, an embodiment comprises determining that a time derivative of a level of at least a part of the spectrum of the signal exceeds a fourth threshold (hereinbelow alternative D).

For the reasons detailed above, preferably also in this alternative (D) the at least a part of the spectrum of the signal of which level is analysed comprises at least a frequency selected from the range 10 kHz to about 25 kHz (e.g. 10 kHz to 22 kHz or 10 kHz to 24 kHz).

Thus, in accordance with the alternatives B and D, an embodiment comprises

- calculating spectral components of the signal from the signal,
- calculating a level of at least a part of the spectrum of the signal using at least such a spectral component of the signal that corresponds to a frequency selected from the range 10 kHz to about 25 kHz (e.g. 10 kHz to 22 kHz or 10 kHz to 24 kHz), and
- determining that the level or a time derivative of the level exceeds a fifth threshold; which fifth is the second threshold as detailed in connection with alternative B or the fourth threshold in connection with alternative D.

In line with what has been said above, in this case the sampling frequency should be at least 20 kHz; preferably at least 44 kHz or at least 48 kHz.

The spectral components of the signal may be calculated from the signal by using the Fourier method, such as a Fast Fourier Transform (FFT). The spectral components of the signal in that case are the Fourier coefficients of the transform, as shown by the coefficients $c_i$ or $c_n$ above.

The level may be calculated e.g. using the Formula 1, the Formula 2, the Formula 3, or the Formula 4.

These alternatives A to D have the benefit that a user can reasonably easily compute suitable thresholds from test data. Such thresholds can then be used in other similar tests.

However, nowadays machine learning techniques can also be used to teach a data-driven model to recognize certain aspects from data (e.g. from the signal receivable from the microphone arrangement 150). It has been found that machine learning techniques can be used to teach a data-driven model to recognize, from a signal generated by a microphone arrangement when transducing sound generated by a tyre making a rolling contact with a movable surface, an onset of failure of the tyre. Typically, when teaching the model, the model does not deed to use any of the criteria detailed above in connection with alternatives A to D. Instead, the machine learning techniques determine themselves the criteria based on the data only.

As will be further detailed below, as a further alternative, the onset of failure may be determined using a data-driven model, which has been taught to detect the onset of failure (hereinbelow alternative E). The data-driven model may detect, but need not detect, the onset of failure from the signal in accordance with the alternatives A to D. Thus, an embodiment comprises using a data-driven model to determine from the signal that the endurance of the tyre has been exceeded.

Thus, in accordance with the alternatives A to E, the method comprises determining from the signal, which has been transduced from the sound generated by the tyre, that an endurance of the tyre has been exceeded. The endurance has been exceeded once the onset of failure from the signal in accordance with the alternatives A to E has been detected.

Moreover, based on the determining, in accordance with any of the alternatives A to E, the method comprises indicating that the endurance of the tyre 200 has been exceeded and/or stopping the rotation of the tyre 200. Thus, it is possible only to indicate to an operator that the endurance of the tyre 200 has been exceeded. The operator may then stop the test. It is possible that a control unit, after the determining, automatically stops the rotation of the tyre. Thus, an embodiment comprises based on the determining, automatically stopping the rotation of the tyre.

Naturally, instead of the signal as such, it is possible to analyse a total sound pressure level (as in Figs. 2a to 2c) or a spectral sound pressure level. The total sound pressure level is expressible e.g. in deciBels (dB). In such cases a primary signal directly obtainable from the microphone arrangement can be transformed to the signal discussed above e.g. by multiplying the primary signal with a proper factor and/or by taking a logarithm of the primary signal to take into account the logarithmic nature of the deciBel scale. The signal obtained from the primary signal by such transformation may then be used as detailed above.

As detailed above, to make the sound, the tyre 200 makes the rolling contact with the movable surface 110. Moreover, the test is preferably conducted such that during the time the tyre 200 makes the rolling contact with the movable surface 110, a centre of mass of the tyre 200 is stationary relative to ground. That is, the centre of mass of the tyre 200 is not moving during the test even if the tyre rotates. In contrast, when mounted to a vehicle, the tyre normally only rotates when the vehicle moves, whereby the tyre also moves.

Referring to Fig. 1c preferably the test is conducted such that a prescribed maximum speed for the tyre to be tested is defined. This may be defined such that the maximum speed rating indicated on the tyre (typically as a letter) is the prescribed maximum speed for the tyre to be tested. In addition, an initial test speed is defined. This may be e.g. 40 km/h or 30 km/h less than the prescribed maximum speed for the tyre to be tested.

Thereafter the peripheral speed of the tyre is increased gradually (e.g. in 10 minutes) to the initial test speed [step i]. The speed is kept constant for some time, say 10 minutes [step ii]. The speed is then increased by 10 km/h and kept constant for some time, say 10 minutes [step iii]. If this is the maximum speed rating indicated on the tyre, the speed is kept constant for some time (e.g. another 10 minutes) after which the test is stopped. Otherwise, the step iii is repeated until the maximum speed is reached. An example of such a test is shown in Fig. 1c, wherein the speed 240 km/h is the prescribed maximum speed and the speed 200 km/h is the initial test speed.

For these reasons, an embodiment of the method comprises rotating the tyre 200 and/or moving the movable surface 110 such that a peripheral speed of the tyre 200 has a first value, which is constant for at least two minutes. This has the benefit that that one or some of:

- the level of the signal,
- the level of the at least a part of the spectrum of the signal,
- the time derivative of a level of the signal, and
- the level of the at least a part of the spectrum of the signal

(see alternatives A to D above) may depend on the tyre that is tested. To elaborate, when the endurance of a primary tyre is evaluated by the test, the first, second, third, or fourth threshold (whichever is applicable in the alternative A to D) is not necessarily the same threshold that should be used when an endurance of a secondary tyre is evaluated by the test. In addition, in accordance with the alternative E it seems beneficial that the data-driven model also receives signal recorded when the tyre rotates by a constant speed for some time.

Moreover, if the peripheral speed of the tyre changes, the level of the signal, the level of the at least a part of the spectrum of the signal, the time derivative of a level of the signal, or the time derivative of the level of the at least a part of the spectrum of the signal (whichever applicable) may exceed a threshold, even if the tyre is not beginning to fail. For example, the time derivative of the level of the signal may exceed a threshold solely because the peripheral speed of the tyre increases. As a specific example, this may happen at the times 20 min, 30 min, 40 min, or 50 min; and also during the whole initial ramp-up phase (0 to 10 min), when the speed profile of Fig. 1c is used.

Thus, it is beneficial that a constant peripheral speed of the tyre lasts for suitably long time (as detailed above), whereby the threshold(s) can be can be set based on typical signal values of a functional tyre at that peripheral speed.

Naturally the term "constant" does not mean exactly zero variation. Variations within the limits of the control system, such as variations up to +-5% are typically acceptable even if the value is considered as constant.

The first value may be selected according to needs. The first value of the peripheral speed, which is constant for at least two minutes may be e.g. from 75 km/h to 275 km/h. The first value may be e.g. 80 km/h, 90 km/h, 100 km/h, 110 km/h, 120 km/h, 130 km/h, 140 km/h, 150 km/h, 160 km/h, 170 km/h, 200 km/h, 230 km/h, or 260 km/h. In the embodiment of Fig. 1c, the first value of 200 km/h was chosen.

If the tyre 200 endures the first peripheral speed for a sufficiently long period of time, the peripheral speed can be increased. Therefore, an embodiment comprises after said rotating the tyre 200 and/or moving the movable surface 110 such that the peripheral speed of the tyre 200 has the first value, rotating the tyre 200 and/or moving a movable surface 110 such that a peripheral speed of the tyre 200 has a second value, which is constant for at least two minutes. Moreover, the second value is greater than the first value. What has been said about a "constant" value above in connection with the first value applies also for the second value.

The second value may be selected according to needs. The second value of the peripheral speed, which is constant for at least two minutes, may be e.g. at least 10 km/h, such as at least 20 km/h greater than the first value. The second value may be e.g. from 110 km/h to 310 km/h. The second value may be e.g. 120 km/h, 130 km/h, 140 km/h, 150 km/h, 160 km/h, 170 km/h, 180 km/h, 190 km/h, 200 km/h, 210 km/h, 240 km/h, 270 km/h, or 300 km/h. In the embodiment of Fig. 1c, the any one of the values 210 km/h, 220 km/h, 230 km/h, or 240 km/h can be considered as the second value. However, it is possible that the endurance limit would be reached already for the speed of 210 km/h, whereby the other possible second values would not be achieved.

When the peripheral speed is constant for some time, in accordance with alternative A (see above), a second level of the signal may be compared with a first level of the signal. When the difference is large this can be indicative of tyre failure. Thus, the first threshold discussed above in connection with alternative A may depend on the first level. Thus, an embodiment comprises determining from the signal a first level when the tyre rotates with a third peripheral velocity and determining from the signal a second level when the tyre rotates with the third peripheral velocity. More specifically, the signal from which the first and second levels are determined is obtained by recoding the sound at the time the tyre rotates with the third peripheral velocity. In other words, the embodiment comprises determining from a signal obtained when the tyre rotates with a third peripheral velocity, a first level; and determining from the signal obtained when the tyre rotates with the third peripheral velocity, a second level. Herein the third peripheral velocity may be, but need not be, equal to the first or the second peripheral velocity as defined above. Moreover, the embodiment comprises determining that the second level exceeds the first level by at least a first amount, such as by at least 0.3 %, or by at least 0.5 %, and based on the determining, indicating that the endurance of the tyre has been exceeded and/or stopping the rotation of the tyre. It is also noted that even if the level in Figs 2a to 2c is given in the decibel scale, these percentage values could be applicable to the level of signal in a non-logarithmic scale (e.g. in units of Pa, N/mm, or V; or a unitless digital data sequence).

Reference is made to Figs. 2a to 2c, wherein an increase of about 0.5 dB seems to be indicative of reaching tyre endurance limit, when the normal sound pressure level is in the range of 100 to 115 dB. It is also noted that a 0.5 dB increase on the 100 dB level corresponds to about 10 % increase in a linear scale ($10^{10.05}$ is 12 % greater than $10^{10}$)).

When the peripheral speed is constant for some time, in accordance with alternative B (see above), a second level of at least a part of the spectrum of the signal, i.e. a second level of a part or the whole spectrum of the signal may be compared with a first level of the same. When the difference is large, this can be indicative of tyre failure. Thus, the second threshold discussed above in connection with alternative B may depend on the first level of the part or the whole spectrum of the signal. Thus, an embodiment comprises determining from the signal obtained when the tyre rotates with a fourth peripheral velocity a first level of a part of the spectrum of the signal or the whole spectrum of the signal. The embodiment further comprises determining from the signal obtained when the tyre rotates with the fourth peripheral velocity a second level of the part of the spectrum of the signal or the whole spectrum of the signal, respectively.

When determining the first and second levels of the part of the spectrum or the whole spectrum, the levels can be determined as discussed above.

Furthermore, this embodiment comprises determining that the second level of the part or the whole spectrum of the signal exceeds the first level of the part or the whole spectrum of the signal by at least a second amount, e.g. by at least 1 % or at least 2 %; and based on the determining, indicating that the endurance of the tyre has been exceeded and/or stopping the rotation of the tyre. Herein the fourth peripheral velocity may be, but need not be, equal to the first, the second, or the third peripheral velocity as defined above. Also in this embodiment, the first and second levels of the part or the whole spectrum of the signal may be expressed in a logarithmic scale or a linear scale.

For example, referring to Fig. 4a, the level at the frequency range 15 kHz to 21 kHz is, at the time 270 s, is 56 dB/Hz. However, later, at time t=311 s, this has increased to the level 64 dB/Hz. However, the data shows also some fluctuation. Taking a time-average over a period of a half of a second, the observed increase in the average value is from 56 dB/Hz to 59 dB/Hz. This corresponds to almost 10 %, which may be much easier to detect than the minor increase in the (non-spectral) sound pressure level.

When the peripheral speed is constant for some time, in accordance with alternative C (see above), a time derivative of the signal may be compared with the third threshold (see above). Referring to Figs. 3a to 3c, it seems that in all the three tyres, a time derivative of at least 0.05 dB/s or at least 0.10 dB/s seems to be indicative of failure. And also conversely, the time derivative remains below 0.1 dB/s or even below 0.05 dB/s in the normal test conditions. However, instead of using a constant threshold, also in this case the threshold may depend on the previous values of the time derivative.

When the peripheral speed is constant for some time, in accordance with alternative C (see above), a secondary time derivative of a level of the signal may be compared with a primary time derivative of the level of the signal. Herein both the primary and secondary time derivative are time derivatives of the first order, i.e. first time derivatives (not second derivatives in the meaning of calculus). When the difference is large this can be indicative of tyre failure. Thus, the third threshold discussed above in connection with alternative C may depend on the primary time derivative of the level of the signal.

The primary and secondary time derivatives can be calculated as well known to a skilled person. In this embodiment both the time derivatives are calculated from a signal that is obtained when the tyre rotates with a constant peripheral velocity. Thus, in an embodiment, determining the primary time derivative of the level of the signal comprises determining from the signal obtained when the tyre rotates with a fifth peripheral velocity a third level of the signal and a fourth level of the signal, and determining from the third level of the signal and the fourth level of the signal the primary time derivative of the level of the signal. Moreover, determining the secondary time derivative of the level of the signal comprises determining from the signal obtained when the tyre rotates with the fifth peripheral velocity a fifth level of the signal and a sixth level of the signal, and determining from the fifth level of the signal and the sixth level of the signal the secondary time derivative of the level of the signal.

The embodiment also comprises determining that the secondary time derivative of the level of the signal exceeds the primary time derivative of the level of the signal by at least a third amount, e.g. at least 5 % or at least 10 %; and based on the determining, indicating that the endurance of the tyre has been exceeded and/or stopping the rotation of the tyre. The signal may be expressed e.g. on a logarithmic scale or a linear scale.

Referring to Figs. 3a to 3c, the primary time derivative may be e.g. of the order of 0.025 dB/s, and the secondary time derivative may reach the values 0.2 dB/s. The exact numbers depend on how large a time difference is selected for calculating the primary time derivative and the secondary time derivative. The value of the time derivative may e.g. roughly double in half a minute (see Figs. 3a to 3c).

When the peripheral speed is constant for some time, in accordance with alternative D (see above), a time derivative of a level of at least a part of the spectrum of the signal may be compared to the fourth threshold (see above).

The fourth threshold may be pre-set, or it may depend on a former value of time derivative of the level of the at least a part of the spectrum of the signal.

As an example, Fig. 4b shows a time derivative of the average value of the level of Fig. 4a, the average calculated over the frequency range 15 kHz to 21 kHz. As readable from Fig. 4a, at some instance of time between the times 270 s and 311 s, the level increases, whereby, at some point in between, there must be a positive time derivative. As shown in Fig. 4b, the fastest increase at sound pressure level at the higher frequencies occur between 290 and 300 s. This may be indicative of the tyre exceeding its endurance. Thus, a pre-set fourth threshold for the derivative of e.g. Fig. 4b could be used. It is noted that the derivative shown in Fig. 4e, which is a time derivative of the level shown in Fig. 4d calculated with the formula 1 shows similar characteristics as the derivative shown in Fig. 4b. This is because in Fig. 4d, the higher frequencies are given more weight to define a level, the weight being proportional to square of frequency. However, for Fig. 4b, the frequencies up to 15 kHz are given zero weight (as they are not included in the frequency range) and the other frequencies are given the weight one irrespective of the value of the frequency (i.e. the first exponent in Formula 1 is zero).

In the alternative, the fourth threshold may depend on the time derivative of the level of at least a part of the spectrum of the signal. Thus, a secondary time derivative of a level of at least a part of the spectrum of the signal may be compared with a primary time derivative of the same. When the difference is large this can be indicative of tyre failure. Thus, the fourth threshold discussed above in connection with alternative D may depend on the primary time derivative of the level of the part or the whole spectrum of the signal.

The primary and secondary time derivatives can be calculated as well known to a skilled person. In this embodiment both the time derivatives are calculated from a signal that is obtained when the tyre rotates with a constant peripheral velocity.

Thus, in an embodiment, determining the primary time derivative of the level of the part or the whole spectrum of the signal comprises determining from the signal obtained when the tyre rotates with a sixth peripheral velocity (I,a) a third level of a part of the spectrum of the signal or (I,b) a third level of the whole spectrum of the signal and (II,a) a fourth level of the part of the spectrum of the signal or (II,b) a fourth level of the whole spectrum of the signal, respectively; and determining from the third level of the part or the whole spectrum of the signal and the fourth level of the part or the whole spectrum of the signal the primary time derivative of the level of the part or the whole spectrum of the signal. Moreover, in an embodiment, determining the secondary time derivative of the level of the part or the whole spectrum of the signal comprises determining from the signal obtained when the tyre rotates with the sixth peripheral velocity (III,a) a fifth level of a part of the spectrum of the signal or (III,b) a fifth level of the whole spectrum of the signal (respectively, depending on how the third level is determined) and (IV,a) a sixth level of the part of the spectrum of the signal or (IV,b) a sixth level of the whole spectrum of the signal, respectively; and determining from the fifth level of the part or the whole spectrum of the signal and the sixth level of the part or the whole spectrum of the signal the secondary time derivative of the level of the part or the whole spectrum of the signal.

When determining the third, fourth, fifth, and sixth levels of the part of the spectrum or the whole spectrum, the level can be determined as discussed above. In particular, any one of the Formulas 1 to 4 may be used to determine the level, of which derivative can then be calculated. As an example, Figures 4e and 4g represents the time derivative on the level calculated using Formula 1 with k=2, l=0.5, and $i_{min}$ and $i_{max}$ corresponding to the whole spectrum.

The embodiment also comprises determining that the second time derivative of the part or the whole spectrum of the signal exceeds the first time derivative of the part or the whole spectrum of the signal by a fourth amount, e.g. at least 5 % or at least 10%; and based on the determining, indicating that the endurance of the tyre has been exceeded and/or stopping the rotation of the tyre.

As detailed above, at least the alternatives B and D comprise calculating spectral components of the signal from the signal and calculating a level of at least a part of a spectrum of the signal.

To generate sound sufficiently and also to simulate real driving conditions, an embodiment comprises pressing the tyre 200 and/or the movable surface 110 against each other with a force F. The force F is depicted in Fig. 1a. The pressing is done while rotating the tyre 200 and/or moving a movable surface 110 as detailed above. Preferably, the force F is at least 65 %, such as 65 % to 100 %, e.g. 75 % to 100 %, of the load rating the tyre is intended to carry. For typical tyres, the load is at least 2 kN (kilo Newton), more typically at least 3 kN. In an embodiment, the force F is at least 3500 N.

Referring to Figs. 1a and 1b, the method for evaluating endurance of the tyre may be carried out using a device for the same. Figs. 1a and 1b show some components of a device 100 for evaluating endurance of a tyre 200.

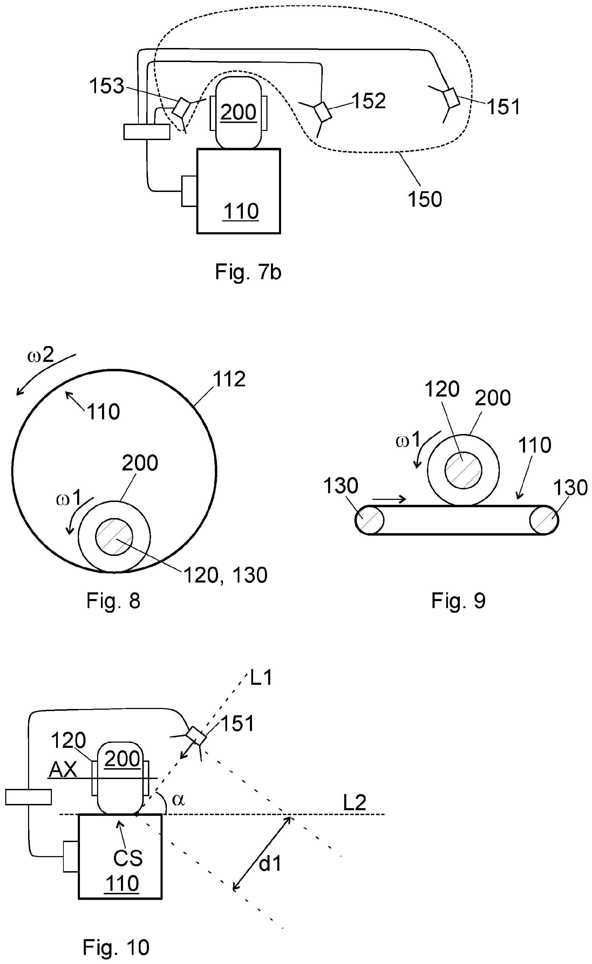

The device 100 comprises the movable surface 110. The function of the movable surface 110 has been disclosed in connection with the method. In an embodiment, the device comprises a test drum 112. As shown in Figs. 1a and 1b, in an embodiment, an outer surface of the test drum 112 forms the movable surface 110. However, as shown in Fig. 8, an inner surface of the test drum 112 of the device 100 may form the movable surface 110. Referring to Fig. 9, the device 100 does not necessarily comprise a test drum. As shown in Fig. 9, a belt may form the movable surface 110.

The device 100 comprises a tyre holder 120. The tyre holder is configured such that a tyre 200 held by the tyre holder 120 contacts the movable surface 110. Moreover, a tyre 200 arranged in the tyre holder 120 is rotatable. In between the tyre 200 and the movable surface 110, a contact surface CS is formed. The tread of the tyre 200 contacts the movable surface via the contact surface CS.

The device 100 comprises a rotor 130. The rotor 130 configured to rotate the tyre holder 120 and/or to move the movable surface 110. Referring to Figs. 1a and 1b, in an embodiment, the rotor 130 is configured to rotate the test drum 112, whereby the movable surface 110 moves upon rotation of the rotor 130; thereby causing the tyre 200 also to rotate. Referring to Fig. 9, in an embodiment, the rotor 130 is configured to rotate a roller, and the roller is configured to move a belt that forms the movable surface 110. Thereby the movable surface 110 moves upon rotation of the rotor 130. Referring to Fig. 8, in an embodiment, the rotor 130 is configured to rotate the tyre holder 120. Moreover, in use, the tyre 200 arranged in the tyre holder 120 makes a rolling contact with the movable surface 110. Thereby the rotation of the rotor 130 rotates the tyre 200, which causes the movable surface 110 to move. This principle is applicable also in the context of Fig. 1a.

The rotor 130 is configured to rotate the tyre holder 120 and/or to move the movable surface 110 such that, in use, the tyre 200 makes a rolling contact with the movable surface 110. Implicitly, the rolling contact of the tyre 200 with the movable surface 110 generates sound. The sound is generated at least mainly at the contact surface CS.

To analyse the sound, the device 100 comprises a microphone arrangement 150 comprising at least a first microphone 151. The microphone arrangement 150 is configured to detect the sound. The device comprises means 159 for sending a signal from the microphone arrangement 150 to a processor 140, and the processor 140, to which the signal is sent. The processor 140 is configured to receive the signal. In line with what has been said in connection with the method, a sampling frequency of the signal is at least 20 kHz. Thus, the device 100 is configured to form the signal such that a sampling frequency of the signal is at least 20 kHz. Thus, the device 100 is configured to sample the sound such that a sampling frequency of the signal is at least 20 kHz. The sampling may be done by the microphone arrangement 150, which in such a case may comprise an analogue to digital converter for the purpose. The sampling may be done by the processor 140. Preferably the sampling frequency of the signal is at least 44 kHz or at least 48 kHz.

As shown in Fig. 1b, the means 159 for sending a signal from the microphone arrangement 150 to the processor 140 may be an electrical wire. In the alternative, the means 159 for sending the signal may comprise a wireless transmitter, such as a radio transmitter. In the alternative, the means 159 for sending the signal may an optical fibre.

In accordance with the alternatives A to E disclosed in connection with the method, the processor 140 is configured to determine from the signal that an endurance of the tyre has been exceeded.

In accordance with the alternatives A to D disclosed in connection with the method, the processor is configured to determine at least one of:

- that a level of the signal exceeds a first threshold,
- that a level of at least a part of a spectrum of the signal exceeds a second threshold,

- that a time derivative of a level of the signal exceeds a third threshold, and
- that a time derivative of a level of at least a part of a spectrum of the signal exceeds a fourth threshold.

In addition or in the alternative, in accordance with the alternative E disclosed in connection with the method, the processor is configured to determine from the signal using a data-driven model that the endurance of the tyre has been exceeded.

Moreover, the device 100 is configured to indicate based on the determining, that the endurance of the tyre has been exceeded and/or stop the rotation of the tyre.

For example, the device 100 may comprise a display unit, and the processor 140 of the device 100 may be configured to send to the display unit instructions for indicating that the endurance of the tyre has been exceeded. The display unit may be wirelessly connected to the processor. Thus, a display unit needs not be part of the device. The device 100 may indicate that the endurance of the tyre has been exceeded solely by sending a second signal, such as a radio signal, to a display unit.

For example, the device 100 may comprise a loudspeaker, and the processor 140 of the device 100 may be configured to send to the loudspeaker a second signal indicating that an alarm sound is to be made.

For example, the device 100 may comprise a control unit controlling the rotator, and the processor 140 of the device 100 may be configured to send to the control unit instructions to stop the rotation of the tyre.

The processor 140 may be configured to determine from the signal a total sound pressure level and/or a spectral sound pressure level. However, typically the onset of tyre failure can be analysed from the signal as such without a need to compute the dB(SPL) values or spectral dB(SPL) values from the signal. In line with what has been in connection with the method, preferably the device (e.g. the processor thereof) is configured to calculate spectral components of the signal from the signal and calculate a level of at least a part of a spectrum of the signal using at least a calculated spectral component. More preferably, the device is configured to use at least such a spectral component of the spectral components of the signal that corresponds to a frequency selected from the range 10 kHz to about 25 kHz (e.g. 10 kHz to 22 kHz or 10 kHz to 24 kHz), to calculate the level of at least a part of a spectrum of the signal.

It has been found that a quality of the signal correlates with how reliably can the onset of failure be detected. The quality of the signal can be improved, and correspondingly reliability of the method can be improved, in several ways including:

- placement of the first microphone 151 relative to the tyre 200 and
- including more microphones to the microphone arrangement 150.

Concerning the placement of the first microphone 151, preferably the first microphone 151 is arranged:

- far from the contact surface CS,
- at a side of the tyre 200, or
- at a side of the tyre 200 and far from the contact surface CS.

This applies both to the device 100 and the method for determining the onset of failure. Furthermore, if a data-driven model is used to determine the onset of failure, when teaching the data-driven model, a microphone arrangement 150 is used, too. What is said about the microphone arrangement 150 applies to teaching such a model, too.

As for the location and placement of the first microphone 151, the sound is mainly generated at the contact surface CS. Thus, preferably the first microphone 151 is directed towards the contact surface CS. Many types of microphones operate best such that a pre-defined direction of the microphone is towards the sound source, of which sound is to be transduced. Thus, in an embodiment, the first microphone 151 is a directional microphone and the first microphone 151 is directed towards the contact surface CS. This is shown by an arrow in connection with the first microphone in Figs. 1b, 5b, 5d, 6, and 7a.

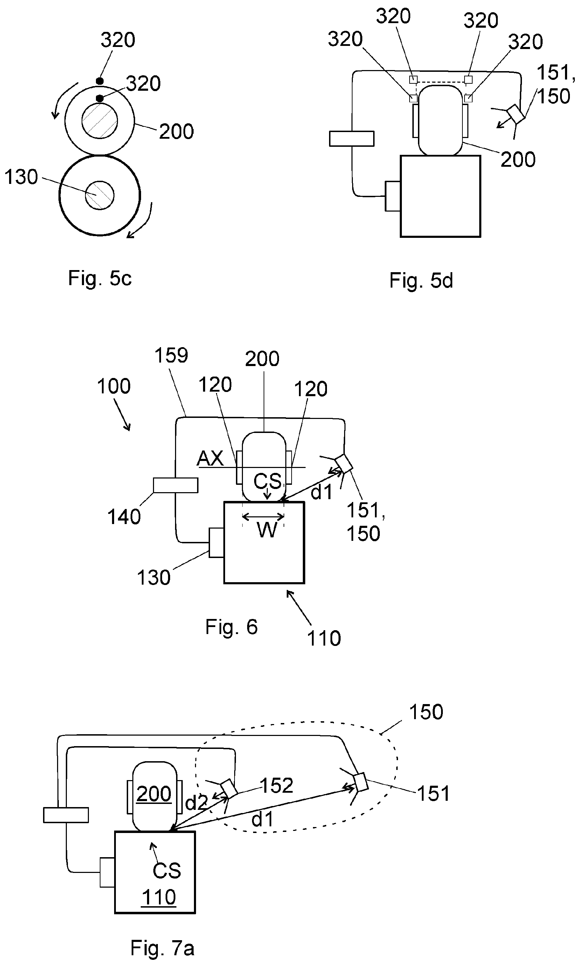

Figures 6 and 7a also show a distance d1 between the first microphone 151 and the contact surface CS. Is has been found that preferably, the first microphone is arranged at a far field from the contact surface CS. In the far field, the air pressure of the sound typically only propagates, while in the near field, the sound may also circulate (i.e. the air may move back and forth).

In general, a limit between the near field and the far field can be calculated such that in far field, the Fresnel parameter S is more than one. The Fresnel parameter is defined as $4\lambda r/D^2$, where r is a distance from the acoustic source, $\lambda$ is the wavelength, and D is a size of the acoustic source. Thus, in terms of the distance r a lower limit for the far field is as follows (Formula 5):

$$\frac{D^2}{4\lambda}$$

wherein D is a largest size (in metres) of the sound source (i.e. the contact surface CS) and $\lambda$ is wavelength of the sound having the highest frequency of interest. It is noted that $\lambda=v/f$, wherein v is the speed of sound in air (normal pressure), i.e. 343 m/s.

A width of the contact surface CS is typically about 0.25 metres. Thus, if frequencies up to 22 kHz are interesting, the first microphone 151 is in the far field, when the distance d1 between the first microphone 151 and the contact surface CS is at least 1.0 m. However, for larger tire, the size of the sound source may be larger, e.g. 0.5 m. In such a case, if frequencies up to 20 kHz are interesting, the first microphone 151 is in the far field, when the distance d1 between the first microphone 151 and the contact surface CS is at least 4 m. Thus, in an embodiment, the distance d1 between the first microphone 151 and the contact surface CS is at least 1.0 m, preferably at least 2.0 m, and more preferably at least 3.0 m.

In other words, in a preferable embodiment, the distance d1 between the first microphone 151 and the contact surface CS is such that the first microphone is arranged in far field for frequencies of 22 kHz; i.e. d1 is at least $D^2\times16$/m. The value 16/m i.e. 16 (per metre) is calculated as 22 kHz divided by the speed of sound in air (given above). As indicated above, in general D is the size of the acoustic source.

In the present case, the size of the sound source D is substantially equal to a width W of the tire (see Figs. 1b and 6). Moreover, the first microphone is preferably in the far field. Thus, in an embodiment of the method the tyre has a width W and the distance d1 between the first microphone 151 and the contact surface CS (which is between the tyre 200 and the movable surface 110) is more than the value calculated by the formula $W^2\times16$/m. Correspondingly, in an embodiment of the device, the tyre holder 120 is configured to hold a tyre having a width W, and the distance d1 between the first microphone 151 and the contact surface CS is more than the value calculated by the formula $W^2\times16$/m. Herein the width W is given in units of metre.

Moreover, preferably at least a part of the spectrum of the signal of which level is analysed comprises at least a frequency selected from the range 10 kHz to about 25 kHz (e.g. 10 kHz to 22 kHz or 10 kHz to 24 kHz) and distance d1 is selected so that the first microphone is in the far field as detailed above. Thus, also preferably, the sampling frequency is at least 44 kHz or at least 48 kHz.

Preferably the first microphone is arranged at a side of the tyre rather than in front of the tyre. With reference to Fig. 10 the tyre holder 120 defines an axis of rotation AX of the tyre 200. Preferably, the first microphone 151 is arranged to such a location that the location of the first microphone 151 and the contact surface CS define a primary line L1. In addition, the location of the first microphone is such that an angle $\alpha$ between the primary line L1 and a secondary line L2 is at most 75 degrees, preferably at most 60 degrees, more preferably at most 45 degrees, wherein the secondary line L2 is parallel to the axis of rotation AX and intersects the contact surface CS. Reference is made to Fig. 10. Preferably the angle $\alpha$ is at most 75 degrees (or at most 60 degrees, or at most 45 degrees) and the distance d1 is at least $W^2\times16$/m, such as at least 1.0 m, preferably at least 2.0 m, and more preferably at least 3.0 m. As for the combination, preferably the angle $\alpha$ is from the smaller end and the distance d1 from the larger end.

In addition or alternatively, preferably the first microphone 151 is directed towards the contact surface CS, as shown by an arrow also in Fig. 10.

Concerning using more microphones, in an embodiment, the microphone arrangement 150 comprises a second microphone 152 (see Fig. 7a). In the embodiment, preferably, the second microphone 152 is arranged closer to the contact surface CS than the first microphone 151. This makes it possible to analyse both a near field acoustic signal received by the second microphone 152 and a far field acoustic signal received by the first microphone 151. The signal discussed above may be the signal from the first microphone or the signal from the second microphone. Moreover, the analysis presented above may be applied to both the signal from the first microphone 151 and the signal from the second microphone 152. Then, the onset of failure may be determined if, from only one of the signals, the onset of failure is inferred in accordance with at least one of the alternatives A to E (see above). Alternative the onset of failure may be determined if, from both one of the signals, the failure is inferred in accordance with at least one of the alternatives A to E (see above). Alternative the onset of failure may be determined if, from a signal combined from both signals of the microphones, the failure is inferred in accordance with at least one of the alternatives A to E (see above).

When using at least two microphones, preferably at least one of them (e.g. the first microphone 151) is arranged in the far field as detailed above. However, in an embodiment, the first microphone 151 is arranged in the far field and the second microphone is arranged in the near field. Thus, in an embodiment the distance d1 between the first microphone 151 and the contact surface CS is more than (the value calculatable by the formula) $W^2\times16$/m and a distance d2 between the second microphone 152 and the contact surface CS is less than (the value calculatable by the formula) $W^2\times16$/m.

In an embodiment, a distance d2 between the second microphone and the contact surface CS may be less than 2.0 m, or less than 1.5 m, such as at most 1.0 m. Moreover, also the second microphone 152 may be arranged at a side of the tyre. What has been said about the angle $\alpha$ in context of the first microphone applies *mutatis mutandis* to the second microphone. Thus, in an embodiment, the second microphone 152 is arranged to such a location that the location of the second microphone 152 and the contact surface CS define a tertiary line (not shown), such that an angle (not shown) between tertiary line and the secondary line L2 is at most 60 degrees. Moreover, when at least two microphones are used, preferably, at least one of them is arranged in the far field (see above). As discussed the first microphone 151 may be arranged in the far field and the second microphone 152 may be arranged in the near field.

Concerning using more microphones, in an embodiment, the microphone arrangement 150 comprises a second 152 and a third microphone 153 (see Fig. 7c). Preferably, at least one of the microphones 151, 152, 153 is arranged in the far field and at least one of the microphones 151, 152, 153 is arranged in the near field. Moreover, preferably, at least one of the microphones 151, 152, 153 is arranged on a first side of the tyre 200 and at least one of the microphones 151, 152, 153 is arranged on an opposite second side of the tyre 200.

In addition to using the signal obtained from the microphone arrangement 150 for determining the onset of tyre failure, a mechanical and/or an optical sensor may be used in addition for the purpose. For example, it has been found that e.g. when the peripheral velocity of the tyre is increasing (see Fig. 1c) it may be hard to determine the onset of failure from the signal, which has been transduced from the sound generated by the tyre. This is hard, because the acceleration of tyre as such also increases the level of the signal and also changes its spectrogram. In particular, corresponding to Fig. 1c, at the instances 20 min, 30 min, 40 min, and 50 min it may be difficult to determine failure only from the sound. Therefore, a mechanical sensor and/or an optical sensor can be used to detect failure of the tyre e.g. at such instances of time to prevent complete burst of the tyre. However, in such cases the early stages of failure may not be detected as detailed in background.

Referring to Figs. 5a and 5b, an embodiment of the device comprises a mechanical sensor 310 configured to detect a condition of the tyre 200. The mechanical sensor 310 may be configured to detect an anomaly of the shape of the tyre 200. Equipment disclosed in the background of the present invention can be used for the purpose. The mechanical sensor 310 may comprise e.g. a rod or wires that are configured to indicate a contact with the tyre 200. However, normally the tyre 200 does not make a contact with the mechanical sensor, but an anomaly of the shape of the tyre 200 may result in the tyre making a contact with the mechanical sensor 310. A corresponding embodiment of the method comprises monitoring also mechanically a condition of the tyre, and based on the monitoring, indicating that the endurance of the tyre has been exceeded and/or stopping the rotation of the tyre.

Referring to Figs. 5c and 5d, an embodiment of the device comprises an optical sensor 320 configured to detect a condition of the tyre 200. The optical sensor 320 may be configured to detect an anomaly of the shape of the tyre 200. Equipment disclosed in the background of the present invention can be used for the purpose. The optical sensor 320 may comprise e.g. high speed camera. The optical sensor 320 may comprise e.g. laser scanner. A corresponding embodiment of the method comprises monitoring also optically a condition of the tyre, and based on the monitoring, indicating that the endurance of the tyre has been exceeded and/or stopping the rotation of the tyre.

The further monitoring optically and/or mechanically improves safety. For example, if for some reason the onset of failure is not detectable from the audial signal, then the optical and/or mechanical monitoring can be used to prevent tyre burst. However, normally, the audial signal is capable of indicating failure earlier than the optical and/or mechanical monitoring based on shape anomaly.

Typically, in the method, a reasonably high peripheral speed of the tyre 200 should be achieved. Therefore, in an embodiment, the rotor 130 is configured to rotate the tyre holder 120 and/or to move the movable surface 110 such that, in use, the tyre 200 has a peripheral velocity that is at least 120 km/h, preferably at least 150 km/h, more preferably at least 200 km/h.

Moreover, as discussed in connection with the method, the tyre 200 should be pressed against the movable surface 110 with a proper force F. Therefore, in an embodiment, the device 100 is configured to press the tyre 200 and/or the movable surface 110 against each other while rotating the tyre 200 and/or moving the movable surface 110 with a force F. As detailed in connection with the method, preferably, the force F is at least is at least 2 kN, more typically at least 3 kN, such as at least 3500 N.

The processor 140 of the device 100 may be configured to run a computer program for the purpose of determining the onset of a tyre failure from a signal. As detailed above, the signal has been formed by a microphone arrangement 150 comprising at least a first microphone 151, which is arranged in an environment including a tyre 200 arranged in a rolling contact with a movably surface 110.

The computer program is, when run on a processor, such as the processor 140, configured to receive a signal generated by a microphone arrangement when transducing sound generated by a tyre making a rolling contact with a movable surface. Moreover, the computer program is configured to determine from the signal that an endurance of the tyre has been exceeded.

Moreover, based on the determining, the computer program is configured to send a second signal indicative of that an endurance of a tyre has been exceeded. As detailed above, the second signal may be sent to a display unit, a control unit, or a loudspeaker.

In accordance with alternatives A to D, in an embodiment, the computer program is configured to determine from the signal at least one of:

- that a level of the signal exceeds a first threshold,
- that a level of at least a part of a spectrum of the signal exceeds a second threshold,
- that a time derivative of a level of the signal exceeds a third threshold, and
- that a time derivative of a level of at least a part of a spectrum of the signal exceeds a fourth threshold.

In accordance with alternative E, in an embodiment, the computer program is configured to determine from the signal using a data-driven model that the endurance of the tyre has been exceeded.

The data-driven model may be part of the computer program itself. In the alternative, analysis of the sginal may be performed using a cloud-based service. Thus, the computer program may be configured to send the signal to a computing entity that is configured determine from the signal that an endurance of the tyre has been exceeded. Then the computing entity is configured to send a result of the determining back to the computer program, and the computer program is configured to receive the result of the determining from the computing entity. Finally, the computer program is configured to send, based on the result of the determining, a second signal indicative of an endurance of a tyre having been exceeded.

In an embodiment, the computer program uses the data-driven model to determine the first, the second, the third, and/or the fourth threshold as discussed in connection with the alternatives A, B, C, and D. The first, the second, the third, and/or the fourth threshold may depend on the signal itself, as detailed above. E.g. the threshold may be exceeded when a difference exceeds a limit, whereby the threshold equals a value determined from the signal added with the limit. Further details have been discussed above.

In an embodiment, a data-driven model is used to determine the first, the second, the third, and/or the fourth threshold. In an embodiment, the computer program comprises the data-driven model for determining the first, the second, the third, and/or the fourth threshold. In an embodiment, the computing entity comprises the data-driven model for determining the first, the second, the third, and/or the fourth threshold.

Preferably, the computer program or the computing entity is configured to calculate spectral components of the signal from the signal; and the program or the computing entity is configured to calculate a level of at least a part of a spectrum of the signal using at least a calculated spectral component. Preferably, the computer program or the computing entity is configured to calculate the level of at least a part of a spectrum of the signal using at least such a spectral component of the spectral components of the signal that corresponds to a frequency selected from the range 10 kHz to about 25 kHz (e.g. 10 kHz to 22 kHz or 10 kHz to 24 kHz).

The data-driven model can be generated by using tools known from machine learning. Such a data-driven model is for the purpose of determining from a signal an endurance of a tyre. However, if the data-driven model is generated by using tools known from machine learning, the model needs not use any one of the thresholds detailed in connection with the alternatives A to D. Instead, the computer program or the entity will analyse the data and determine the onset of failure on the criteria, which is based on the machine learning. The criteria may comprise, but need not comprise, the thresholds detailed above.

An embodiment of a method for teaching a data-driven model for the purpose of determining from a signal an endurance of a tyre comprises the following steps (a-g).

(a) arranging a tyre 200 to a tyre holder 120,
(b) rotating the tyre 200 and/or moving a movable surface 110 such that the tyre 200 makes a rolling contact with the movable surface 110 thereby generating sound,
(c) transducing the sound generated by the tyre to a signal using a microphone arrangement 150 comprising at least a first microphone 151.

The embodiment comprises (d) recording the signal. The recording may comprise storing the signal. For reasons detailed above, the method comprises recording the signal using a sampling frequency of at least 20 kHz, such as at least 44 kHz or at least 48 kHz.

The embodiment comprises (e) observing a failure of the tyre. This may be done by observing a burst of the tyre. In the alternative, this may be done using the optical or mechanical sensor for determining an anomaly of the shape of the tyre as detailed above.

The embodiment comprises (f) teaching the data-driven model with the recorded signal and the fact that the tyre has failed.

When sufficiently many occurrences of failures have been used for teaching the data-driven model, the data-driven model becomes sufficiently accurate for determining the tyre failure. Thus, the embodiment comprises (g) repeating the steps a to f. The steps a to f are naturally not repeated infinitely. Instead, when sufficiently many repetitions have been made, the model can be used.

In the step (f) the data-driven model may be taught with the recorded signal and the fact that the tyre was not failed before the time the tyre was observed to have failed. Optionally, the data-driven model may be taught with the recorded signal and the fact that the tyre was not failed at least a period of time before the instance of time the tyre was observed to fail. The period of time can be selected to be e.g. 10 s to 30 s. With reference to e.g. Figs. 4b and 4e it seems that initial failures might be observable from the sound of the rotating tyre already about 20 s before burst of the tyre.

Most promising data for teaching the data-driven model seem to include:

- the state of the tyre (failed or not failed) as function of time,
- the signal as function of time,
- the peripheral velocity of the tyre as function of time.

Additionally or as an alternative to the signal as such, a spectrogram (i.e. spectral components as function of time) of the signal can be used.

Additionally or as an alternative to the peripheral velocity, a time derivative of the peripheral velocity of the tyre as function of time may be used. The velocity and/or its time derivative may help the process of teaching the model to disregard the instances on non-constant peripheral velocity. Thus, as an alternative to the peripheral velocity and/or its time derivative, a state of the velocity (constant or not) as function of time may be used in the teaching.

In case the data-driven model is taught to determine the first threshold in connection with the alternative A disclosed above, the level of the signal may be pre-calculated from the signal, and the level may be used for teaching the model.

In case the data-driven model is taught to determine the second threshold in connection with the alternative B disclose above, a level of at least the part of the spectrum of the signal may be pre-calculated from the signal, and the level of at least the part of the spectrum of the signal may be used for teaching the model. This may involve defining the part of the spectrum that is used for teaching. Formulas 1 to 4 may be used.

In case the data-driven model is taught to determine the third threshold in connection with the alternative C disclose above, the level of the signal and its time derivative may be pre-calculated from the signal, and the time derivative may be used for teaching the model. Calculation of time derivative may involve defining the time difference that is used in the numerical calculation of the derivative.

In case the data-driven model is taught to determine the fourth threshold in connection with the alternative D disclose above, a level of at least the part of the spectrum of the signal and its time derivative may be pre-calculated from the signal, and the time derivative may be used for teaching the model. This may involve defining the part of the spectrum that is used for teaching. Formulas 1 to 4 may be used for calculating the level. Calculation of time derivative of the level may involve defining the time difference that is used in the numerical calculation of the derivative.

In general, however, a data-driven model can be taught with the data (and/or the spectrogram thereof) as such, and there is no need to limit the functionality of the data-driven model such that it may only use one of the thresholds detailed above in connection with alternatives A to D for determining the onset of failure.

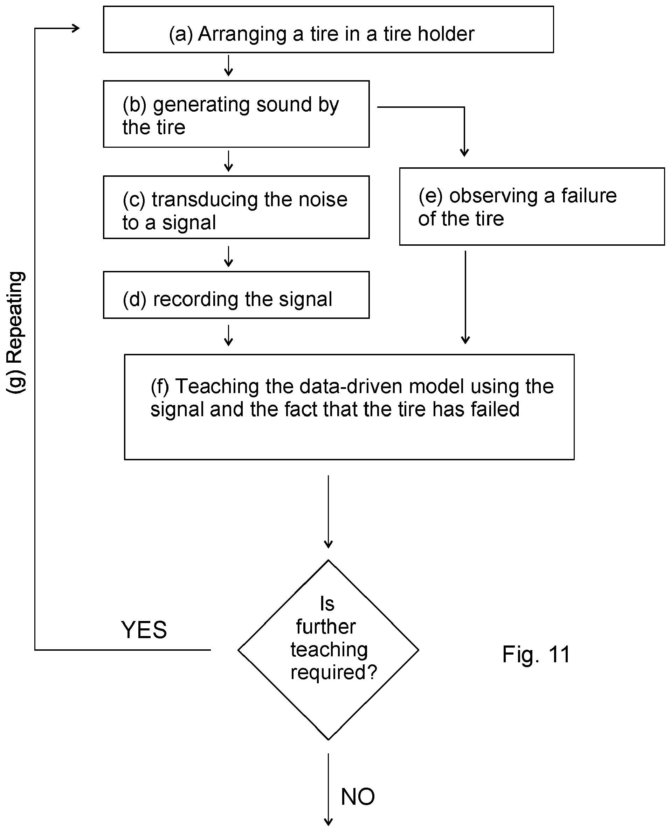

These steps are illustrated in Fig. 11. Therein the step (b): rotation of the tyre and/or moving the movable surface is written in short as "generating sound by the tyre". As illustrated in Fig. 11, the transducing and recording of the signal may take place in parallel with observing the state of the tyre, whether it has been failed or not. Naturally, the transducing and recording takes place at least as long as it takes for the tyre to fail. However, the sound may be transduced and recorded also thereafter.

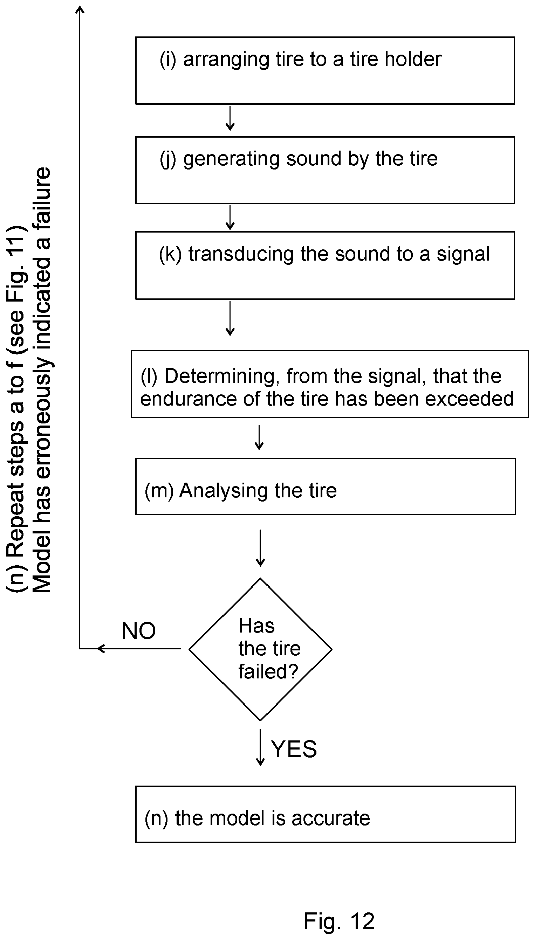

To determine whether sufficiently many repetitions have occurred, an embodiment comprises after at least some repetitions of the steps a to f the following steps i to n (see Fig. 12):

(i) arranging a tyre to a tyre holder, (j) rotating the tyre and/or moving a movable surface such that the tyre makes a rolling contact with the movable surface, and (k) transducing sound generated by the tyre to a signal using a microphone arrangement comprising at least a first microphone.

Furthermore, the method comprises (l) determining, from the signal, using the data-driven model, that the endurance of the tyre has been exceeded. Thus, in this case, some failure criterion is full filled. E.g. a threshold according to any one of the alternatives A to D is exceeded; or another criterion generated by machine learning tools according to alternative E is reached.

Furthermore the method comprises (m) analysing the tyre to determine information indicating whether the endurance of tyre has been exceeded or not. In contrast to step (l), in step (m) the physical tyre is analysed to receive information on the true condition of the tyre. Finally (n) if the information is indicative of the endurance not having been exceeded, the method comprises repeating the steps a to f. In this case the data-driven model has erroneously indicated, from the signal, an onset of failure, because the true condition of the tyre is such that the endurance limit was not exceeded. Otherwise the method comprises indicating that the data-driven model is accurate.

The embodiment is depicted in Fig. 12. In this embodiment, the model is considered not accurate, if the model erroneously indicates a failure; otherwise the model is considered, or at least it may be, accurate.

Concerning the step (I), in accordance with the alternatives A to D in an embodiment the method comprises at least one of the following steps I,i to I,iv, respectively:

(I, i) Using the data-driven model to determine a first threshold such that a level of the signal exceeding the first threshold is indicative of an endurance of a tyre having been exceeded; and determining from the signal that a level of the signal exceeds the first threshold.

(I, ii) Using the data-driven model to determine a second threshold such that a level of at least a part of the spectrum of the signal exceeding the second threshold is indicative of an endurance of a tyre having been exceeded; and determining from the signal that that a level of at least a part of the spectrum of the signal exceeds the second threshold.

(I, iii) Using the data-driven model to determine a third threshold such that a time derivative of a level of the signal exceeding the third threshold is indicative of an endurance of a tyre having been exceeded; and determining from the signal that a time derivative of a level of the signal exceeds the third threshold.

(I, iv) Using the data-driven model to determine a fourth threshold such that a time derivative of a level of at least a part of the spectrum of the signal exceeding the fourth threshold is indicative of an endurance of a tyre having been exceeded; and determining from the signal that a time derivative of a level of at least a part of the spectrum of the signal exceeds the fourth threshold.

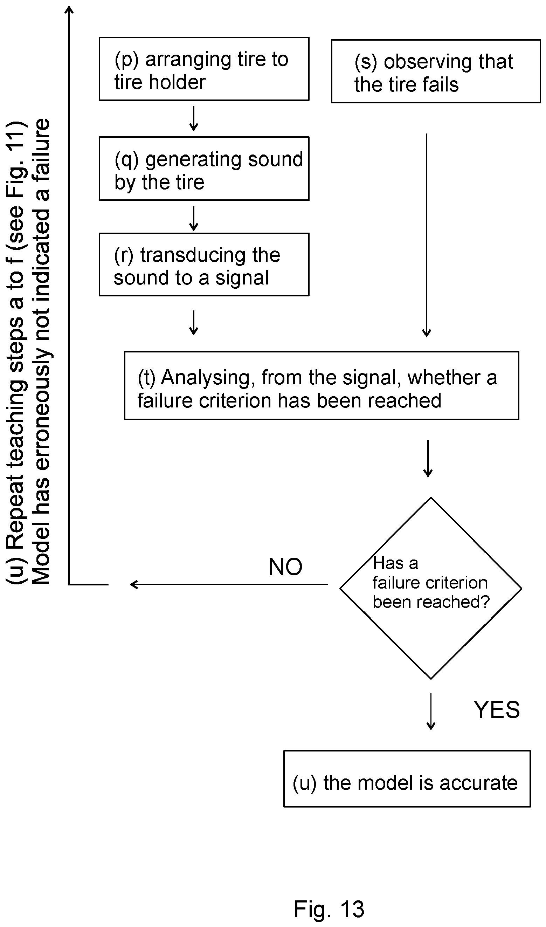

Another embodiment is depicted in Fig. 13. In the embodiment of Fig. 13, the model is considered not accurate, if the model erroneously does not indicate a failure. With reference to Fig. 13 this embodiment comprises the steps p to u. However the steps p, q, and r are the same as the steps i, j, and k in the embodiment of Fig. 12 and need no further discussion.

Moreover, the embodiment comprises the step (s) of observing that the tyre fails. The true failure of the tyre is observed as a burst of the tyre or using an optical or mechanical sensor for the purpose e.g. by detecting an anomaly of the shape of the tyre. The mechanical sensor 310 discussed above and shown in Figs. 5a and 5b may be used. In addition or alternatively, the optical sensor 320 discussed above and shown in Figs. 5c and 5d may be used.

The embodiment comprises the step (t) of analysing, from the signal, using the data-driven model, whether a failure criterion has been reached or not.

Finally, in step (u), if the failure criterion determined from the signal has not been reached, the method comprises repeating steps a to f (see Fig. 11). Moreover, the data obtained in steps p to s can be used to teach the data-driven model. In this case the data-driven model did not accurately indicate the onset of failure. Otherwise, the embodiment comprises indicating that the model is accurate.

Concerning the step (t), in accordance with the alternatives A to D in an embodiment the method comprises at least one of the following steps t,i to t,iv, respectively:

(t, i) Using the data-driven model to determine a first threshold such that a level of the signal exceeding the first threshold is indicative of an endurance of a tyre having been exceeded; and determining from the signal that a level of the signal does not exceed the first threshold.

(t, ii) Using the data-driven model to determine a second threshold such that a level of at least a part of the spectrum of the signal exceeding the second threshold is indicative of an endurance of a tyre having been exceeded; and determining from the signal that that a level of at least a part of the spectrum of the signal does not exceed the second threshold.

(t, iii) Using the data-driven model to determine a third threshold such that a time derivative of a level of the signal exceeding the third threshold is indicative of an endurance of a tyre having been exceeded; and determining from the signal that a time derivative of a level of the signal does not exceed the third threshold.

(t, iv) Using the data-driven model to determine a fourth threshold such that a time derivative of a level of at least a part of the spectrum of the signal exceeding the fourth threshold is indicative of an endurance of a tyre having been exceeded; and determining from the signal that a time derivative of a level of at least a part of the spectrum of the signal does not exceed the fourth threshold.

The procedures of embodiments of Figs. 12 and 13 can both be used e.g. subsequently to determine the accuracy of the data-driven model both in terms of limiting the amount of erroneous indications of failure and in terms of erroneous absences of indications of failures. Finally, even if either or both of the embodiments of Fig. 12 or 13 indicate that the data-driven model is accurate, some repetitions may be done to receive sufficiently many indications of the model being accurate.

There is naturally an interplay between the embodiments of Fig. 12 and Fig. 13. For example, if, in the method of embodiment of Fig. 12, it is considered sufficient for inferring tyre failure that only one of the criteria of the steps (I,i) to (I,iv) needs to be fulfilled, then in the method of the embodiment of Fig. 13, a tyre is inferred as fully functional only if all the criteria of the steps (t,i) to (t,iv) are filled.

Conversely, if, in the method of embodiment of Fig. 12, it is considered sufficient for inferring tyre failure that all of the criteria of the steps (I,i) to (I,iv) needs to be fulfilled, then in the method of embodiment of Fig. 13, a tyre is considered fully functional even if (at least) only one of the criteria of the steps (t,i) to (t,iv) are fulfilled.

When the data-driven model has been taught, it may be used in accordance with the alternative E or any one of the alternatives A to D disclosed in connection with method for evaluating endurance of a tyre.

**Claims**

1. A method for evaluating endurance of a tyre, the method comprising

    - arranging the tyre to a tyre holder,
    - rotating the tyre and/or moving a movable surface such that the tyre makes a rolling contact with the movable surface, thereby generating sound by the tyre,
    - transducing the sound generated by the tyre to a signal using a microphone arrangement comprising at least a first microphone and a sampling frequency of at least 20 kHz,
    - determining from the signal that an endurance of the tyre has been exceeded, and
    - based on the determining, indicating that the endurance of the tyre has been exceeded and/or stopping the rotation of the tyre.

2. The method of claim 1 wherein the determining that the endurance of the tyre has been exceeded comprises

    - determining at least one of the following:

        • that a level of the signal exceeds a first threshold,
        • that a level of at least a part of the spectrum of the signal exceeds a second threshold,
        • that a time derivative of a level of the signal exceeds a third threshold, and
        • that a time derivative of a level of at least a part of the spectrum of the signal exceeds a fourth threshold, and/or

    - using a data-driven model to determine from the signal that the endurance of the tyre has been exceeded.

3. The method of the claim 1 or 2 comprising

    - calculating spectral components of the signal from the signal and
    - calculating a level of at least a part of a spectrum of the signal by using at least a spectral component of the spectral components of the signal; preferably the method comprises
    - calculating a level of at least a part of a spectrum of the signal by using at least such a spectral component of the spectral components of the signal that corresponds to a frequency selected from the range 10 kHz to 24 kHz.

4. The method of any of the claims 1 to 3, comprising

    - rotating the tyre and/or moving the movable surface such that a peripheral speed of the tyre has a first value, which is constant for at least two minutes; preferably, the method further comprises
    - after said rotating the tyre and/or moving the movable surface such that the peripheral speed of the tyre has the first value, rotating the tyre and/or moving a movable surface such that a peripheral speed of the tyre has a second value, which is constant for at least 2 minutes, wherein
    - the second value is greater than the first value;

    preferably,

- the first value is at least 80 km/h and/or
- the second value is at least 120 km/h.

5.  The method of any of the claims 1 to 4, comprising

[A]

- determining from the signal obtained when the tyre rotates with a third peripheral velocity, a first level of the signal,
- determining from the signal obtained when the tyre rotates with the third peripheral velocity, a second level of the signal,
- determining that the second level of the signal exceeds the first level of the signal by at least a first amount and
- based on the determining, indicating that the endurance of the tyre has been exceeded and/or stopping the rotation of the tyre and/or

[B]

- determining from the signal obtained when the tyre rotates with a fourth peripheral velocity a first level of a part of the spectrum of the signal or the whole spectrum of the signal,
- determining from the signal obtained when the tyre rotates with the fourth peripheral velocity a second level of the part of the spectrum of the signal or the whole spectrum of the signal, respectively,
- determining that the second level of the part or the whole spectrum of the signal exceeds the first level of the part or the whole spectrum of the signal by at least a second amount, and
- based on the determining, indicating that the endurance of the tyre has been exceeded and/or stopping the rotation of the tyre and/or

[C]

- determining from the signal obtained when the tyre rotates with a fifth peripheral velocity a third level of the signal and a fourth level of the signal,
- determining from the third level of the signal and the fourth level of the signal a primary time derivative of the level of the signal,
- determining from the signal obtained when the tyre rotates with the fifth peripheral velocity a fifth level of the signal and a sixth level of the signal,
- determining from the fifth level of the signal and the sixth level of the signal a secondary time derivative of the level of the signal,
- determining that the secondary time derivative of the level of the signal exceeds the primary time derivative of the level of the signal by at least a third amount, and
- based on the determining, indicating that the endurance of the tyre has been exceeded and/or stopping the rotation of the tyre and/or

[D]

- determining from the signal obtained when the tyre rotates with a sixth peripheral velocity a third level of a part of the spectrum of the signal or the whole spectrum of the signal and a fourth level of the part of the spectrum of the signal or the whole spectrum of the signal, respectively,
- determining from the third level of the part or the whole spectrum of the signal and the fourth level of the part or the whole spectrum of the signal a primary time derivative of the level of the part or the whole spectrum of the signal,
- determining from the signal obtained when the tyre rotates with the sixth peripheral velocity a fifth level of the part of the spectrum of the signal or the whole spectrum of the signal, respectively, and a sixth level of the part of the spectrum of the signal or the whole spectrum of the signal, respectively,
- determining from the fifth level of the part or the whole spectrum of the signal and the sixth level of the part or the whole spectrum of the signal a secondary time derivative of the level of the part or the whole spectrum of the signal,
- determining that the secondary time derivative of the part or the whole spectrum of the signal exceeds the primary time derivative of the part or the whole spectrum of the signal by at least a fourth amount, and

- based on the determining, indicating that the endurance of the tyre has been exceeded and/or stopping the rotation of the tyre.

**6.** The method of any of the claims 1 to 5 comprising

- monitoring also optically and/or mechanically a condition of the tyre, and
- based on the monitoring, indicating that the endurance of the tyre has been exceeded and/or stopping the rotation of the tyre.

**7.** The method of any of the claims 1 to 6 comprising

- pressing the tyre and/or the movable surface against each other with a force while rotating the tyre and/or moving the movable surface,

preferably,

- the force is at least 2 kN, more preferably at least 3500 N.

**8.** A device (100) for evaluating endurance of a tyre (200), the device (100) comprising

- a movable surface (110),
- a tyre holder (120) configured such that a tyre (200) held by the tyre holder (120) contacts the movable surface (110),
- a rotor (130) configured to rotate the tyre holder (120) and/or to move the movable surface (110) such that, in use, the tyre (200) makes a rolling contact with the movable surface (110),
- a processor (140),
- a microphone arrangement (150) comprising at least a first microphone (151) configured to detect sound, and
- means (159) for sending a signal from the microphone arrangement (150) to the processor (140), wherein
- a sampling frequency of the signal is at least 20 kHz,
- the processor (140) is configured to determine from the signal that an endurance of the tyre has been exceeded, and the device (100) is configured
- to indicate based on the determining, that the endurance of the tyre has been exceeded and/or to stop the rotation of the tyre.

**9.** The device of claim 8 comprising

[A]

- a mechanical sensor (310) configured to detect a condition of the tyre (200), for example a mechanical sensor (310) configured to detect an anomaly of the shape tyre (200) and/or

[B]

- an optical sensor (320) configured to detect a condition of the tyre, for example a laser scanner or a camera configured to detect an anomaly of the shape of the tyre (200).

**10.** The device of claim 8 or 9, wherein

- the rotor (130) is configured to rotate the tyre holder (120) and/or to move the movable surface (110) such that, in use, the tyre (200) has a peripheral velocity that is at least 80 km/h, preferably at least 120 km/h and/or
- the device (100) is configured to press the tyre (200) and/or the movable surface (110) against each other while rotating the tyre (200) and/or moving the movable surface (110) with a force (F), wherein, preferably, the force is at least 3500 N.

**11.** A method for teaching a data-driven model for the purpose of determining from a signal an endurance of a tyre, the method comprising

a. arranging a tyre to a tyre holder,

b. rotating the tyre and/or moving a movable surface such that the tyre makes a rolling contact with the movable surface thereby generating sound,

c. transducing the sound generated by the tyre to a signal using a microphone arrangement comprising at least a first microphone,

d. recording the signal using a sampling frequency of at least 20 kHz,

e. observing a failure of the tyre, and

f. teaching the data-driven model with the recorded signal and the fact that the tyre has failed, and

g. repeating the steps a to f.

12. The method of claim 11, comprising

i. arranging a tyre to a tyre holder,

j. rotating the tyre and/or moving a movable surface such that the tyre makes a rolling contact with the movable surface,

k. transducing sound generated by the tyre to a signal using a microphone arrangement comprising at least a first microphone,

l. determining, from the signal, using the data-driven model, that the endurance of the tyre has been exceeded,

m. analysing the tyre to determine information indicating whether the endurance of tyre has been exceeded or not, and

n. if the information is indicative of the endurance not having been exceeded, repeating the steps a to f; otherwise indicating that the data-driven model is accurate.

13. The method of claim 11 or 12, comprising

p. arranging a tyre to a tyre holder,

q. rotating the tyre and/or moving a movable surface such that the tyre makes a rolling contact with the movable surface,

r. transducing sound generated by the tyre to a signal using a microphone arrangement comprising at least a first microphone,

s. observing that the tyre fails,

t. analysing, from the signal, using the data-driven model, whether a failure criterion has been reached or not, and

u. if the failure criterion determined from the signal has not been reached, repeating the steps a to f; otherwise indicating that the data-driven model is accurate.

14. The method or the device of any of the preceding claims, wherein

- the tyre has a width (W), or the tyre holder (120) is configured to hold a tyre having a width (W), and

- a distance (d1) between the first microphone (151) and a contact surface (CS) between the tyre (200) and the movable surface (110) is more than $W^2 \times 16$ per metre;

preferably

- a distance (d1) between the first microphone (151) and a contact surface (CS) between the tyre (200) and the movable surface (110) is at least at least 1.0 m, preferably at least 2.0 m, and more preferably at least 3.0 m.

15. The method or the device of any of the preceding claims, wherein

- the microphone arrangement (150) comprises at least a second microphone (152);

preferably,

[A]

- the second microphone (152) is arranged closer to a/the contact surface (CS) between the tyre (200) and the movable surface (110) than the first microphone (151); and/or

[B]

- the tyre has a width (W), or the tyre holder (120) is configured to hold a tyre having a width (W), and
- a distance (d1) between the first microphone (151) and a contact surface (CS) between the tyre (200) and the movable surface (110) is more than $W^2 \times 16$ per metre; and/or

[C]

- the tyre has a width (W), or the tyre holder (120) is configured to hold a tyre having a width (W), and
- a distance (d1) between the first microphone (151) and a contact surface (CS) between the tyre (200) and the movable surface (110) is more than $W^2 \times 16$ per metre and
- a distance between the second microphone (152) and a contact surface (CS) between the tyre (200) and the movable surface (110) is less than $W^2 \times 16$ per metre.

16. The method or the device of any of the preceding claims, wherein

- the tyre holder (120) defines an axis of rotation (AX) of a/the tyre (200) and
- the first microphone (151) is arranged to such a location that
- the location of the first microphone (151) and a/the contact surface (CS) between the tyre (200) and the movable surface (110) define a primary line (L1), wherein
- an angle ($\alpha$) between the primary line (L1) and a secondary line (L2) that is parallel to the axis of rotation (AX) is at most 75 degrees; and/or
- the first microphone (151) is directed towards the contact surface (CS).

17. A computer program that, when run on a processor, is configured to

- receive a signal generated by a microphone arrangement transducing sound generated by a tyre making a rolling contact with a movable surface the signal having a sampling frequency of at least 20 kHz,

[A]

- determine from the signal that an endurance of the tyre has been exceeded and
- send based on the determining, a second signal indicative of an endurance of a tyre having been exceeded OR

[B]

- send the signal to a computing entity that is configured to determine from the signal that an endurance of the tyre has been exceeded, wherein
- the computing entity is configured to send a result of the determining back to the computer program, and the computer program is configured to

- receive the result of the determining from the computing entity, and
- send based on the result of the determining a second signal indicative of an endurance of a tyre having been exceeded.

18. The computer program of claim 17, wherein the computer program or the computing entity is configured to calculate spectral components of the signal from the signal and calculate a level of at least a part of a spectrum of the signal.


**Amended claims in accordance with Rule 137(2) EPC.**

1. A method for evaluating endurance of a tyre, the method comprising

- arranging the tyre to a tyre holder,
- rotating the tyre and/or moving a movable surface such that the tyre makes a rolling contact with the movable surface, thereby generating sound by the tyre,
- transducing the sound generated by the tyre to a signal using a microphone arrangement comprising at least a first microphone and a sampling frequency,
- determining from the signal that an endurance of the tyre has been exceeded, and

- based on the determining, indicating that the endurance of the tyre has been exceeded and/or stopping the rotation of the tyre,
**characterized in that**
- the sampling frequency is at least 44 kHz.

2. The method of claim 1 wherein the determining that the endurance of the tyre has been exceeded comprises

- determining at least one of the following:

• that a level of the signal exceeds a first threshold,
• that a level of at least a part of the spectrum of the signal exceeds a second threshold,
• that a time derivative of a level of the signal exceeds a third threshold, and
• that a time derivative of a level of at least a part of the spectrum of the signal exceeds a fourth threshold, and/or

- using a data-driven model to determine from the signal that the endurance of the tyre has been exceeded.

3. The method of the claim 1 or 2 comprising

- calculating spectral components of the signal from the signal and
- calculating a level of at least a part of a spectrum of the signal by using at least a spectral component of the spectral components of the signal; preferably the method comprises
- calculating a level of at least a part of a spectrum of the signal by using at least such a spectral component of the spectral components of the signal that corresponds to a frequency selected from the range 10 kHz to 24 kHz.

4. The method of any of the claims 1 to 3, comprising

- rotating the tyre and/or moving the movable surface such that a peripheral speed of the tyre has a first value, which is constant for at least two minutes; preferably, the method further comprises
- after said rotating the tyre and/or moving the movable surface such that the peripheral speed of the tyre has the first value, rotating the tyre and/or moving a movable surface such that a peripheral speed of the tyre has a second value, which is constant for at least 2 minutes, wherein
- the second value is greater than the first value;
preferably,
- the first value is at least 80 km/h and/or
- the second value is at least 120 km/h.

5. The method of any of the claims 1 to 4, comprising

[A]

- determining from the signal obtained when the tyre rotates with a third peripheral velocity, a first level of the signal,
- determining from the signal obtained when the tyre rotates with the third peripheral velocity, a second level of the signal,
- determining that the second level of the signal exceeds the first level of the signal by at least a first amount and
- based on the determining, indicating that the endurance of the tyre has been exceeded and/or stopping the rotation of the tyre and/or

[B]

- determining from the signal obtained when the tyre rotates with a fourth peripheral velocity a first level of a part of the spectrum of the signal or the whole spectrum of the signal,
- determining from the signal obtained when the tyre rotates with the fourth peripheral velocity a second level of the part of the spectrum of the signal or the whole spectrum of the signal, respectively,
- determining that the second level of the part or the whole spectrum of the signal exceeds the first level of the part or the whole spectrum of the signal by at least a second amount, and

- based on the determining, indicating that the endurance of the tyre has been exceeded and/or stopping the rotation of the tyre and/or

[C]

- determining from the signal obtained when the tyre rotates with a fifth peripheral velocity a third level of the signal and a fourth level of the signal,
- determining from the third level of the signal and the fourth level of the signal a primary time derivative of the level of the signal,
- determining from the signal obtained when the tyre rotates with the fifth peripheral velocity a fifth level of the signal and a sixth level of the signal,
- determining from the fifth level of the signal and the sixth level of the signal a secondary time derivative of the level of the signal,
- determining that the secondary time derivative of the level of the signal exceeds the primary time derivative of the level of the signal by at least a third amount, and
- based on the determining, indicating that the endurance of the tyre has been exceeded and/or stopping the rotation of the tyre and/or

[D]

- determining from the signal obtained when the tyre rotates with a sixth peripheral velocity a third level of a part of the spectrum of the signal or the whole spectrum of the signal and a fourth level of the part of the spectrum of the signal or the whole spectrum of the signal, respectively,
- determining from the third level of the part or the whole spectrum of the signal and the fourth level of the part or the whole spectrum of the signal a primary time derivative of the level of the part or the whole spectrum of the signal,
- determining from the signal obtained when the tyre rotates with the sixth peripheral velocity a fifth level of the part of the spectrum of the signal or the whole spectrum of the signal, respectively, and a sixth level of the part of the spectrum of the signal or the whole spectrum of the signal, respectively,
- determining from the fifth level of the part or the whole spectrum of the signal and the sixth level of the part or the whole spectrum of the signal a secondary time derivative of the level of the part or the whole spectrum of the signal,
- determining that the secondary time derivative of the part or the whole spectrum of the signal exceeds the primary time derivative of the part or the whole spectrum of the signal by at least a fourth amount, and
- based on the determining, indicating that the endurance of the tyre has been exceeded and/or stopping the rotation of the tyre.

6. The method of any of the claims 1 to 5 comprising

- monitoring also optically and/or mechanically a condition of the tyre, and
- based on the monitoring, indicating that the endurance of the tyre has been exceeded and/or stopping the rotation of the tyre.

7. The method of any of the claims 1 to 6 comprising

- pressing the tyre and/or the movable surface against each other with a force while rotating the tyre and/or moving the movable surface,
preferably,
- the force is at least 2 kN, more preferably at least 3500 N.

8. A device (100) for evaluating endurance of a tyre (200), the device (100) comprising

- a movable surface (110),
- a tyre holder (120) configured such that a tyre (200) held by the tyre holder (120) contacts the movable surface (110),
- a rotor (130) configured to rotate the tyre holder (120) and/or to move the movable surface (110) such that, in use, the tyre (200) makes a rolling contact with the movable surface (110),
- a processor (140),

- a microphone arrangement (150) comprising at least a first microphone (151) configured to detect sound, and
- means (159) for sending a signal from the microphone arrangement (150) to the processor (140), wherein
- the processor (140) is configured to determine from the signal that an endurance of the tyre has been exceeded, and the device (100) is configured
- to indicate based on the determining, that the endurance of the tyre has been exceeded and/or to stop the rotation of the tyre

**characterized in that**

- the device (100) is configured to form the signal such that a sampling frequency of the signal is at least 44 kHz.

9. The device of claim 8 comprising

[A]

- a mechanical sensor (310) configured to detect a condition of the tyre (200), for example a mechanical sensor (310) configured to detect an anomaly of the shape tyre (200) and/or

[B]

- an optical sensor (320) configured to detect a condition of the tyre, for example a laser scanner or a camera configured to detect an anomaly of the shape of the tyre (200).

10. The device of claim 8 or 9, wherein

- the rotor (130) is configured to rotate the tyre holder (120) and/or to move the movable surface (110) such that, in use, the tyre (200) has a peripheral velocity that is at least 80 km/h, preferably at least 120 km/h and/or
- the device (100) is configured to press the tyre (200) and/or the movable surface (110) against each other while rotating the tyre (200) and/or moving the movable surface (110) with a force (F), wherein, preferably, the force is at least 3500 N.

11. A method for teaching a data-driven model for the purpose of determining from a signal an endurance of a tyre, the method comprising

a. arranging a tyre to a tyre holder,
b. rotating the tyre and/or moving a movable surface such that the tyre makes a rolling contact with the movable surface thereby generating sound,
c. transducing the sound generated by the tyre to a signal using a microphone arrangement comprising at least a first microphone,
d. recording the signal using a sampling frequency of at least 44 kHz,
e. observing a failure of the tyre, and
f. teaching the data-driven model with the recorded signal and the fact that the tyre has failed, and
g. repeating the steps a to f.

12. The method of claim 11, comprising

i. arranging a tyre to a tyre holder,
j. rotating the tyre and/or moving a movable surface such that the tyre makes a rolling contact with the movable surface,
k. transducing sound generated by the tyre to a signal using a microphone arrangement comprising at least a first microphone,
l. determining, from the signal, using the data-driven model, that the endurance of the tyre has been exceeded,
m. analysing the tyre to determine information indicating whether the endurance of tyre has been exceeded or not, and
n. if the information is indicative of the endurance not having been exceeded, repeating the steps a to f; otherwise indicating that the data-driven model is accurate.

13. The method of claim 11 or 12, comprising

p. arranging a tyre to a tyre holder,

q. rotating the tyre and/or moving a movable surface such that the tyre makes a rolling contact with the movable surface,

r. transducing sound generated by the tyre to a signal using a microphone arrangement comprising at least a first microphone,

s. observing that the tyre fails,

t. analysing, from the signal, using the data-driven model, whether a failure criterion has been reached or not, and

u. if the failure criterion determined from the signal has not been reached, repeating the steps a to f; otherwise indicating that the data-driven model is accurate.

**14.** The method or the device of any of the preceding claims, wherein

- the tyre has a width (W), or the tyre holder (120) is configured to hold a tyre having a width (W), and
- a distance (d1) between the first microphone (151) and a contact surface (CS) between the tyre (200) and the movable surface (110) is more than $W^2 \times 16$ per metre;

preferably

- a distance (d1) between the first microphone (151) and a contact surface (CS) between the tyre (200) and the movable surface (110) is at least at least 1.0 m, preferably at least 2.0 m, and more preferably at least 3.0 m.

**15.** The method or the device of any of the preceding claims, wherein

- the microphone arrangement (150) comprises at least a second microphone (152);

preferably,

[A]

- the second microphone (152) is arranged closer to a/the contact surface (CS) between the tyre (200) and the movable surface (110) than the first microphone (151); and/or

[B]

- the tyre has a width (W), or the tyre holder (120) is configured to hold a tyre having a width (W), and
- a distance (d1) between the first microphone (151) and a contact surface (CS) between the tyre (200) and the movable surface (110) is more than $W^2 \times 16$ per metre; and/or

[C]

- the tyre has a width (W), or the tyre holder (120) is configured to hold a tyre having a width (W), and
- a distance (d1) between the first microphone (151) and a contact surface (CS) between the tyre (200) and the movable surface (110) is more than $W^2 \times 16$ per metre and
- a distance between the second microphone (152) and a contact surface (CS) between the tyre (200) and the movable surface (110) is less than $W^2 \times 16$ per metre.

**16.** The method or the device of any of the preceding claims, wherein

- the tyre holder (120) defines an axis of rotation (AX) of a/the tyre (200) and
- the first microphone (151) is arranged to such a location that
- the location of the first microphone (151) and a/the contact surface (CS) between the tyre (200) and the movable surface (110) define a primary line (L1), wherein
- an angle ($\alpha$) between the primary line (L1) and a secondary line (L2) that is parallel to the axis of rotation (AX) is at most 75 degrees; and/or
- the first microphone (151) is directed towards the contact surface (CS).

**17.** A computer program that, when run on a processor, is configured to

- receive a signal generated by a microphone arrangement transducing sound generated by a tyre making a rolling contact with a movable surface the signal having a sampling frequency of at least 44 kHz,
[A]

- determine from the signal that an endurance of the tyre has been exceeded and
- send based on the determining, a second signal indicative of an endurance of a tyre having been exceeded OR

[B]

- send the signal to a computing entity that is configured to determine from the signal that an endurance of the tyre has been exceeded, wherein
- the computing entity is configured to send a result of the determining back to the computer program, and the computer program is configured to
- receive the result of the determining from the computing entity, and
- send based on the result of the determining a second signal indicative of an endurance of a tyre having been exceeded.

18. The computer program of claim 17, wherein the computer program or the computing entity is configured to calculate spectral components of the signal from the signal and calculate a level of at least a part of a spectrum of the signal.

Fig. 1a

Fig. 1b

Fig. 1c

## Tire: 235/40R18

Fig. 2a

## Tire: 225/40R18

Fig. 2b

## Tire: 205/55R16

Fig. 2c

Fig. 3a

Fig. 3b

Fig. 3c

Tire: 225/40R18

Fig. 4a

Tire: 225/40R18

Fig. 4b

Fig. 4c

Fig. 4d

Fig. 4e

Tire: 205/55R16

sqFreq weighted SP

515    520    525    530    535    540    545

Time / s

Fig. 4f

Tire: 205/55R16

Time derivative of sqFreq weighted SP

30  15  0  -15

515    520    525    530    535    540    545

Time / s

Fig. 4g

310

200

130

Fig. 5a

310    200

151, 150

Fig. 5b

Fig. 5c

Fig. 5d

Fig. 6

Fig. 7a

Fig. 7b

Fig. 8

Fig. 9

Fig. 10

(a) Arranging a tire in a tire holder

(b) generating sound by the tire

(c) transducing the noise to a signal

(e) observing a failure of the tire

(d) recording the signal

(f) Teaching the data-driven model using the signal and the fact that the tire has failed

(g) Repeating

YES

Is further teaching required?

NO

Fig. 11

(i) arranging tire to a tire holder

(j) generating sound by the tire

(k) transducing the sound to a signal

(l) Determining, from the signal, that the endurance of the tire has been exceeded

(m) Analysing the tire

Has the tire failed?

NO

YES

(n) Repeat steps a to f (see Fig. 11)
Model has erroneously indicated a failure

(n) the model is accurate

Fig. 12

Fig. 13

Europäisches
Patentamt

European
Patent Office

Office européen
des brevets

# EUROPEAN SEARCH REPORT

Application Number

**EP 22 21 0177**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 671 632 A1 (CHAPOUX EDOUARD) 17 July 1992 (1992-07-17) * page 4, line 23 - page 7, line 28; figures 1,2 * | 1-18 | INV. G01M17/02 |
| X | KR 2022 0039199 A (KUMHO TIRE CO INC [KR]) 29 March 2022 (2022-03-29) * paragraph [0027] - paragraph [0053]; figures 1-4 * | 1-18 | |
| A | JP 3 595411 B2 (BRIDGESTONE CORP) 2 December 2004 (2004-12-02) * paragraph [0045] * | 1-18 | |
| A | CN 109 900 352 B (TOYO TIRE & RUBBER CO) 18 May 2021 (2021-05-18) * paragraph [0022] - paragraph [0064]; figures 1,2 * | 1-18 | |
| A | US 2014/277929 A1 (PATURLE ANTOINE [FR] ET AL) 18 September 2014 (2014-09-18) * paragraph [0064] - paragraph [0082]; figures 1-8 * | 1-18 | TECHNICAL FIELDS SEARCHED (IPC) G01M |

The present search report has been drawn up for all claims

| Place of search | Date of completion of the search | Examiner |
|---|---|---|
| The Hague | 9 May 2023 | Reto, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 0177

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| FR 2671632 | A1 | 17-07-1992 | NONE | | |
| KR 20220039199 | A | 29-03-2022 | NONE | | |
| JP 3595411 | B2 | 02-12-2004 | JP 3595411 B2 | | 02-12-2004 |
| | | | JP H09288002 A | | 04-11-1997 |
| CN 109900352 | B | 18-05-2021 | CN 109900352 A | | 18-06-2019 |
| | | | DE 102018131293 A1 | | 13-06-2019 |
| | | | JP 7011453 B2 | | 26-01-2022 |
| | | | JP 2019100981 A | | 24-06-2019 |
| US 2014277929 | A1 | 18-09-2014 | BR 112014007822 A2 | | 18-04-2017 |
| | | | CN 103842189 A | | 04-06-2014 |
| | | | EP 2748019 A1 | | 02-07-2014 |
| | | | FR 2981009 A1 | | 12-04-2013 |
| | | | JP 6013492 B2 | | 25-10-2016 |
| | | | JP 2014532004 A | | 04-12-2014 |
| | | | US 2014277929 A1 | | 18-09-2014 |
| | | | WO 2013050710 A1 | | 11-04-2013 |

EPO FORM P0459

For more details about this annex : see Official Journal of the European Patent Office, No. 12/82

**EP 4 379 345 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006232026 A
- JP 2004077464 A
- JP 2004177240 A